# EUROPEAN PATENT APPLICATION

(11) **EP 1 058 183 A2**
(43) Date of publication of application: **06.12.2000**
(21) Application number: 00111481.8
(22) Date of filing: 29.05.2000
(51) Int. Cl.: G06F 7/52

(54) **High speed multiplication**

(30) Priority: 31.05.1999 JP 15144899
(71) Applicant: NEC CORPORATION, Tokyo (JP); Katayama, Aisuke, Akita-shi, Akita-ken (JP)
(72) Inventor: Katayama, Aisuke, Akita-shi, Akita-ken (JP)
(74) Representative: Glawe, Delfs, Moll & Partner

(57) **Abstract**

To carry out high speed multiplication with no rounding error, a multiplication apparatus is provided to obtain a partial product Q of a multiplicand X having N digits (N ≧2) represented by an L scale number (L≧2) and a multiplier Y having M digits (M ≧2) represented by an L scale number. This multiplication apparatus comprises a partial product calculation unit (12), which is adapted to calculate, for each order of the multiplier Y, a partial product having maximum N+1 digits as a multiplied value of a numerical value of the order and the multiplicand X, and then store the partial product in a work memory (16) in an array form; and a pair-down operation unit (13), which is adapted to perform slant addition (pair operation) and 1 digit conversion by carrying (down operation) for partial products calculated by the partial product calculation unit (12) in the order of a partial product of an order 0 of the multiplier Y to a partial product of an order M-1 with two partial products adjacent to each other set as a pair, and then operate numerical values of respective digits constituting the product Q in sequence.

## Description

### BACKGROUND OF THE INVENTION

### Field of the Invention

This application is based on Japanese Patent Application No. Hei 11-151448, the content of which is incorporated herein by reference.

The present invention relates to a multiplication method and an apparatus thereof. More particularly, the present invention relates to a pair-down multiplication method and a pair-down multiplication apparatus, which are suitably used for multiplication by each other of large numbers having great numbers of digits.

### Description of the Related Art

Multiplication of large numbers is necessary in the field of, for example astronomy, nonlinear programming (NP) or the like. Operations involving numbers represented by binary floating points with each other based on a normal floating point operation system result in large calculation errors including rounding errors, errors accompanying base number conversion, and so on, and thus are impractical to use. To deal with such problems, the inventor presented a multiplication apparatus (referred to as a conventional multiplication apparatus, hereinafter) described below, which can obtain an end product without any errors at a high speed by utilizing a new product called a product of the figures totally different from that used in a conventional multiplication system (Japanese Patent No. 2818512).
(a) Assuming that a multiplicand X is numerical value of N digits (N≧2) represented by an L scale number (L≧2) and similarly a multiplier Y is a numerical value of M digits (M≧2) represented by an L scale number, first all the combinations of optional one numerical value of the multiplicand X with that of the multiplier Y are formed into the groups of a sum of the orders 0 to (N-1)+(M-1) for each kind of the multiplicand of the two numerical values to be combined and sums of the orders 0 to N-1 and 0 to M-1 indicating places in the multiplier.
(b) Then, for each group, the multiplied values of the two numerical values to be combined are added for all the combinations belonging to the group. The value of this addition becomes the product of the figures for the group.
(c) Subsequently, the least significant digit of the product of the figures for the group having a sum of the 0 order is outputted as a tail figure, and all the digits of numerical values other than the least significant digit are reduced by one digit, i.e., a value shifted by one digit is set as a current residual number.
   Specifically, an operation is repeated in the following manner. In the order of the products of the figures from those of the group having a sum of the order 1 to those of the group having a sum of the order; (N-1)+(M-1), the current residual number and the products of the figures are added together, and the least significant digit of the value of the addition is outputted as a tail figure. Also, all the digits of numerical values other than the least significant digit are reduced by one digit, and values obtained by such reductions are set as current residual numbers.

A product Q of the multiplicand X and the multiplier Y is given in the array of the outputted tail figure and the residual number; at the end of the operation.

With the foregoing conventional multiplication apparatus, an operation based on the products of the figures and the tail figure enabled large number; having great number; of digits to be multiplied by each other without any errors at a high speed by performing an operation only for a number having a much smaller number of digits compared with those of the original multiplicand and multiplier.

However, some problems still remained to be solved for the conventional multiplication apparatus. Specifically, in the conventional multiplication apparatus, regarding the foregoing processing (c), the products of the figures to be currently processed are switched in sequence, and the number of products of the figures to be switched is about N+M. Consequently, frequent switching of the products of the figures to be processed occurs, which may cause operational overhead. In addition, because of unequal number of digits of the products of the figures among all the groups, a uniform adding method cannot be used in the case of adding the current residual numbers and the products of the figures, and the operation of shifting all the numerical values other than the least significant digit of the addition value by one digit must be performed. These problems cause a reduction in the operational speed, especially when multiplication is executed by computer software.

### SUMMARY OF THE INVENTION

Thus, an object of the present invention is to enable multiplication of large numbers by each other to be performed with high accuracy and at a higher speed.

Another object of the present invention is to further increase an operational speed by processing numerical values of identical digits in the same manner each time and removing a shifting operation in the repeated operation of obtaining parts of the multiplied value as an operation result in sequence.

Yet another object of the present invention is to enable the storage capacity necessary in an operation process to be reduced.

In order to achieve the object, the present invention provides a multiplication apparatus for obtaining a product Q of a multiplicand X having N digits (N ≧2) represented by an L scale number (L≧2) with a multiplier Y having M digits (M≧2) represented by the L scale number. In this case, the multiplication apparatus comprises: a partial product calculation unit for calculating a partial product of a maximum N+1 digit number as a multiplied value between a numerical value of an order and the multiplicand X for each order in the multiplier Y; and a pair-down operation unit for operating numerical values of respective digits constituting the product Q in sequence by making a pair of two partial products of orders adjacent to each other in the order of a partial product from that of an order 0 to that of an order M-1 in the multiplier Y, and performing slant addition and a carrying operation.

With the above multiplication apparatus, it is possible to execute multiplication of large numbers by each other without any errors at a higher speed. The reason for this can be attributed to the following. That is, the number of repetitions of the operation of sequentially obtaining parts of the multiplied value as an operation resulting in the pair-down operation unit is halved compared with that in the conventional multiplication apparatus, which in turn eliminates the necessity of a shifting operation, necessitating only slant addition and carrying. In addition, since the partial products of the same digits are processed each time, processing becomes uniform. Moreover, since a carrying operation is performed for the result of slant addition of such fixed-length partial products, the propagation distance of carrying is limited.

In synchronization with processing by the pair-down operation unit, the partial product calculation unit stores the partial products from the order 0 to the order M-1 of the multiplier Y alternately in two arrays. With this constitution, irrespective of the number of digits of the multiplier Y, pair-down multiplication can be executed only by the two arrays. As a result, it is possible to greatly reduce the storage capacity necessary in the operation process.

Furthermore, with the constitution of representing a multiplier, a multiplicand, a product as a last solution, and so on, by binary numbers, partial products are either bit patterns of all 0 or multipliers themselves. Accordingly, it is possible to simplify the calculation of partial products, and to perform high-speed execution by a logical circuit or a sequential circuit using a binary logic.

In the present invention, the secondary partial product array p[0],...p[M-1] of equal length having N+1 digit orders is basically used corresponding to the orders 0, 1,..., M-1 of the multiplier. Since all the arrays are equal in length, a pair structure has equal lengths for upper and lower sides, slant addition is always executed in the same manner N number of times, low-order digit numbers of a true product are sent out one by one from a right end of the upper array of the pair, and a most significant order of a true product is given in the pair-down arrays of a pair-down operation of M number of times

The reference numerals appended in the claims do not limit the interpretation of the claims.

### BRIEF DESCRIPTION OF THE DRAWINGS

Fig. 1 is a block diagram showing an embodiment of a computer, to which the present invention is applied.
Fig. 2 is a view showing an example of data stored in an input memory.
Fig.3 is a flow chart showing a processing example of a partial product calculation unit according to a first embodiment of the present invention.
Fig. 4 is a view showing a state of an array stored in a work memory at the end of an operation of the partial product calculation unit according to the first embodiment of the present invention.
Fig. 5 is a flow chart showing a processing example of a pair-down operation unit according to the first embodiment of the present invention.
Fig. 6 is a view illustrating a slant operation and conversion into one digit executed by the pair-down operation unit.
Fig. 7 is a view showing a state of an array stored in the work memory at the end of processing performed by the pair-down operation unit for all pairs according to the first embodiment of the present invention.
Fig. 8 is a flow chart showing a processing example of a partial product calculation unit according to a second embodiment of the present invention.
Fig. 9 is a flow chart showing a processing example of a pair-down operation unit according to the second embodiment of the present invention.
Fig. 10 is a view showing a state transition of any array in a work memory according to the second embodiment of the present invention.
Fig. 11 is a view showing a state transition of an array in a work memory according to a third embodiment of the present invention.
Fig. 12 is a view showing a state transition of an array in the work memory according to the third embodiment of the present invention.
Fig. 13 is a flowchart showing a procedure for performing multiplication according to the present invention.
Fig. 14 is an example of a program source list described in the C++ language based on the procedure shown in the flowchart of Fig. 13.
Fig. 15 is an output of an execution result of the program shown in Fig. 14.

### DESCRIPTION OF THE PREFERRED EMBODIMENTS

The following embodiments do not restrict the interpretation of the claims relating to the present invention, and the combination of all the features explained in the embodiments is not always an indispensable means for solving the problem.

Next, a detailed description will be given for the preferred embodiments of the present invention with reference to the accompanying drawings.

### [First Embodiment]

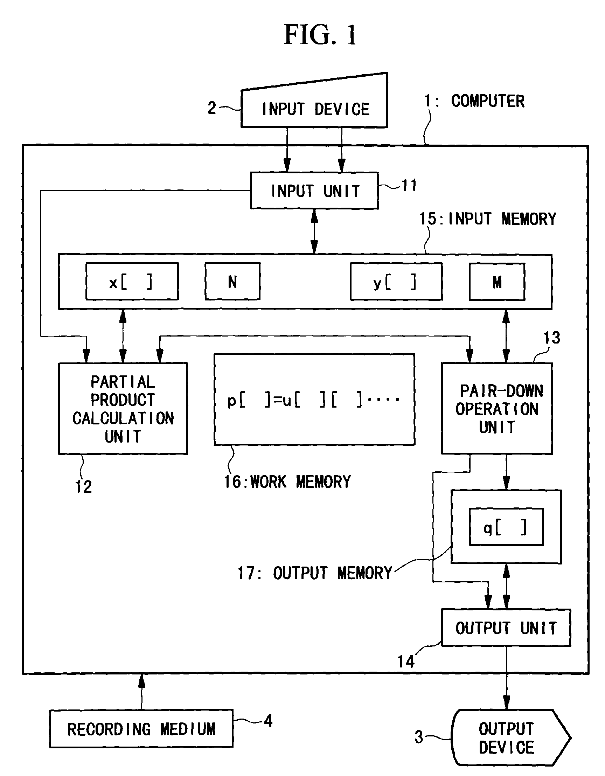

Fig. 1 illustrates a computer 1 according to an embodiment of the present invention. This computer 1 is connected to an input device 2, an output device 3 and a recording medium 4, and comprises inside a functional portion including an input unit 11, a partial product calculation unit 12, a pair-down operation unit 13 and an output unit 14, and a storage portion including an input memory 15, a work memory 16 and an output memory 17. Each of the memory units 15 to 17 is composed of a main memory constituting the computer 1, and each of the functional units 11 to 14 is composed of an MPU and a multiplication program constituting the computer 1. The multiplication program is stored on a computer-readable recording medium 4, such as a CD-ROM, a floppy disk, or a semiconductor memory. At the time of starting the computer 1 and so on, the multiplication program stored in the recording medium 4 is read by the computer 1. By controlling the operation of the computer 1, the functional units 11 to 14 and the memory units 15 to 17 are respectively actuated thereon.

The input device 2 may be keyboard, a disk device or the like, and multiplicand X and a multiplier Y are entered to the computer 1 from this input device 2. It is assumed herein that a multiplicand X is a numerical value of N digits (N≧2) represented by an L scale number (L≧2), and the multiplier Y is a numerical value of M digits (M≧2) represented similarly by an L scale number. Hereinbelow, to assist understanding of the principle and operation of the present invention, the following numerical values of 4 digits represented by decimal numbers are used respectively as specific examples of the multiplicand X and the multiplier Y.
Multiplicand X=6957
Multiplier Y=8134

The input unit 11 stores the multiplicand X, the multiplier Y and the numbers of digits N and M thereof entered from the input device 2 in the input memory 15.

The multiplicand X is represented by an array x having a number N of array elements from an element x[0] of 0-th to an element x[N-1] of N-1-th. The multiplier Y is represented by an array y having a number M of array elements horn an element y[0] of 0-th to an element y[M-1] of M-1-th. These arrays are respectively stored in the input memory 15. A value in [ ] of each array element is an index of the array, and the numerical values of digits constituting the multiplicand X and the multiplier Y are stored in the array elements having the same indexes as those of orders indicating places of the numerical values. For example, in the case of the multiplicand X being 6957, the order of the digit 7 is 0 as its place is 0, the order of the digit 5 is 1 as its place is 10, similarly thereafter the order of the digit 9 is 2, and order of the digit 6 is 3. Accordingly, the values of the respective array elements of the array x are as follows:
x[0]=7, x[1]=5, x[2]=9, x[3]=6
Likewise, in the case of the multiplier Y being 8134, the values of the array elements of the array y are as follows:
y[0]=4,y[1]=3,y[2]=1,y[3]=8

For each order of the multiplier Y stored in the input memory 15, the partial product calculation unit 12 calculates a partial product of N+1 digits as a multiplied value of a numerical value of the order and the multiplicand X, and stores a result of the calculation in the work memory 16. In this case, each partial product is represented by an array p having a number N+1 of array elements from an array element u[first index][second index] of 0-th, which has two indexes of first and second, to an array element u[first index][second index] of N-th. This array p is stored in the work memory 16. All the first indexes in one array p take the same value and, for example, take the same value as that of the order of the multiplier Y related to the above partial product. The second index takes the same value as that of an order of each digit, for example when a least significant digit of the partial product has an order 0. Further, the array p is provided with an index having the same value as that of the first index so as to be differentiated from the other array p.

For example, since the partial product of the numerical value, 4, of the order 0 of the multiplier Y, 8134, and the multiplicand X, 6957, is 27828, the values and indexes of the respective array elements of an array p[0] are as follows:

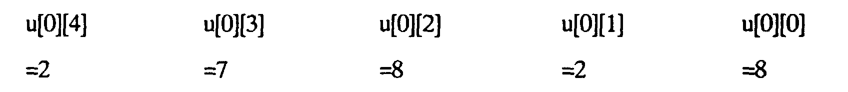

The partial product of the numerical value 1 of the order 2 of the multiplier Y, 8134, and the multiplicand X, 6957, is 6957. Thus, if the number of digits is not N+1 but N, 0 is placed in the array element having a second index of N. A specific example is as follows:

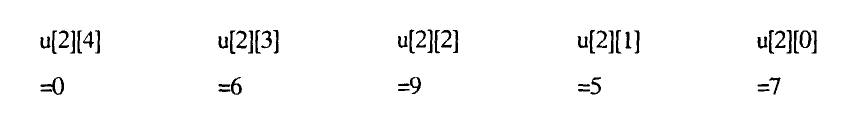

Hereupon, each array element of the array p has a capacity of storing a numerical value equivalent to 2 digits in preparation for an operation performed by the later-described pair-down operation unit 13. Accordingly, as a specific example, u[0][4]=02 is stored.

The work memory 16 has a capacity of storing a plurality of array p generated as described above by the partial product calculation unit 12.

The pair-down operation unit 13 performs slant addition and carrying for the partial products calculated by the partial product calculation unit 12 and stored as array in the work memory 16 in the order of a partial product having an order 0 of the multiplier Y to a partial product having an order M-1 with the partial products adjacent to each other set as a pair, and thus obtains numerical values of respective digits constituting a product Q of the multiplicand X and the multiplier Y, and then outputs the numerical values to the output memory 17. The product Q is represented as an array q having an N+M number of array elements from an element q[0] of 0-th to an element q[N+M-1] of N+M-1-th.

The output unit 14 outputs the product Q stored in the output memory 17 to the output device 3. For the output device 3, a display, a disk device or the like is used.

Next, a detailed description will be given of a specific example of multiplication execution of the embodiment with reference to the drawings. With the present invention, large numbers can be multiplied by each other without any errors. For the sake of convenience, however, hereinbelow, the description is given using an example of a case where a product Q, 56588238, is calculated by multiplying the multiplicand X, 6957, and the multiplier Y, 8134 of 4 digits based on a decimal number by each other.

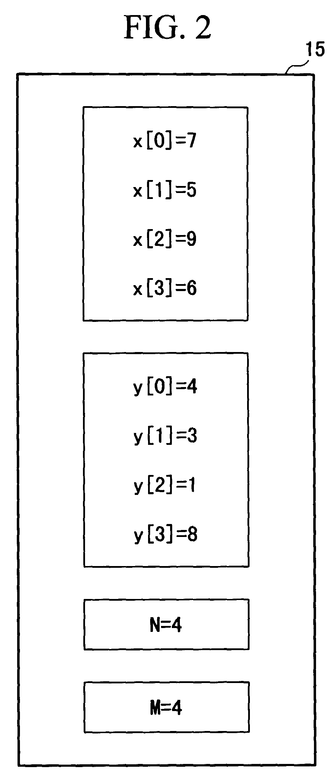

After the entry of the multiplicand X and the multiplier Y from the input device 2, the input unit 11 investigates the numbers of digits for the multiplicand X and the multiplier Y, stores the number of digits N, i.e. 4, of the multiplicand X and the number of digits M, i.e. 4, of the multiplier Y in the input memory 15 as shown in Fig. 2, and also stores arrays x and y respectively of the multiplicand X and the multiplier Y. Then, the partial product calculation unit 12 is started.

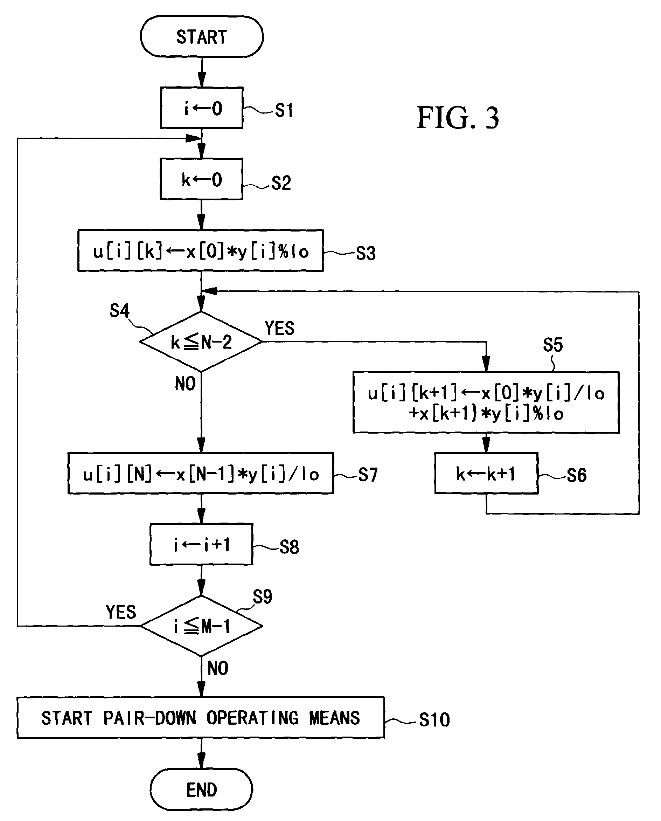

The partial product calculation unit 12 obtains the value of M from the input memory 15, and starts the processing shown in Fig. 3 after securing areas for a number M of arrays p[0] to p[M-1] in the work memory 16. The array elements of the respective array p[0] to p[M-1] all take the same value N+1, and each one of the array elements has the capacity of storing a numerical value of 2 digits. For example, when a numerical value of 1 digit based on a decimal number is represented by a binary coded decimal (BCD), each array element has a size of 4 bits × 2=8 bits.

In Fig. 3, the partial product calculation unit 12 first initializes an internal variable i to 0 (step S1), repeats loop operations of steps S2 to S9 until the variable i exceeds M-1, and then starts the pair-down operation unit 13 (step S10). Subsequently, the process comes to an end.

Each loop operation of steps S2 to S9 is equivalent to processing performed to calculate a partial product of N+1 digits as a multiplied value of the numerical value of each order and the multiplicand X for each order of the multiplier Y, and storing the calculated partial product in a proper array. One partial product is processed by one loop. A specific processing example is described below.

First, an internal variable k is initialized to 0 (step S2), and a residual (%10) after division of a multiplied value of x[0] and y[0] by 10 is stored in an array element u[0][0] of an array p[0] (step S3). Because x[0]=7 and y[0]=4,4 × 7=28÷10: a residual of 8 is obtained, and u[0][0] is set to 8.

Then, addition is performed for a quotient (/10) obtained after division of a multiplied value of x[0] and y[0] by 10 and a residual obtained after division of a multiplied value x[1] and y[0] by 10, and the value of the addition is stored in the array element u[0][1] of the array p[0] (step S5). Because x[0]=7, x[1]=5 and y[0]=4, (4×7)/0=2 (the quotient) and (4×5)%10=0 (the residual) are added together to obtain u[0][1]=2. Then, by adding +1 to k to set 1 (step S6), step S5 is executed again to obtain u[0][2]=8. Subsequently, by adding +1 to k to set (step S6), step S5 is executed again to obtain u[0][3]=7 (step S5). Then, by adding +1 to k (step S6), k=3 is reached, which does not satisfy the continuation condition of k≧N-2=2. Thus, the process moves from step S4 to step S7.

In step S7, a quotient (2) obtained after division of a multiplied value (24) of x[3] and y[0] by 10 is stored in an array element u[0][4] of the array p[0].

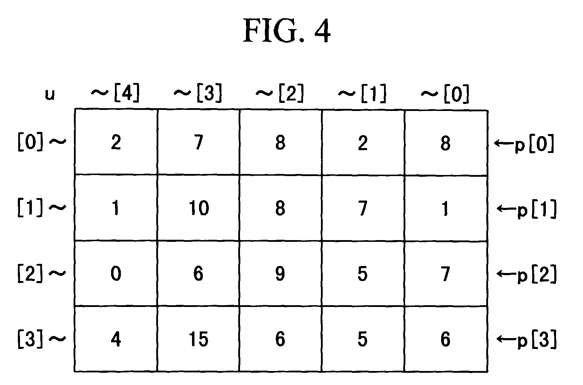

As a result of the foregoing process, as shown in Fig. 4, the value of the partial product of the numerical value 4 of the order 0 of the multiplier Y and the multiplicand X is stored in the array p[0] in the work memory 16.

The partial product calculation unit 12 then adds +1 to the variable i to set 1 (step S8), and returns the process to step S2 to calculate a partial product related to the order 1 of the multiplier Y. In this way, the partial product of the order 1 of the multiplier Y, the partial product of the order 2 and the partial product of the order 3 are sequentially calculated and, when the variable i becomes 4, the process leaves the loop operation in step S9. At this time, as shown in Fig. 4, the values of the respective elements of the away p corresponding to the orders 0 to 3 of the multiplier Y are established in the work memory 16.

The value of the array element u[1][3] of the array p[1] is 10, and the value of the array element u[3][3] of the array p[3] is 15, both having 2 digits. In the embodiment, however, carrying is omitted to maintain 2 digits. The reason for this is that as conversion into 1 digit is carried out by the later-described pair-down operation unit 13, and conversion into 1 digit may not be necessary at this stage. Needless to say, conversion into 1 digit is allowed at this stage.

When the multiplication program is described in the C++ language, steps S2 to S9 and steps S4 to S6 can be easily described respectively by DO statements and for statements.

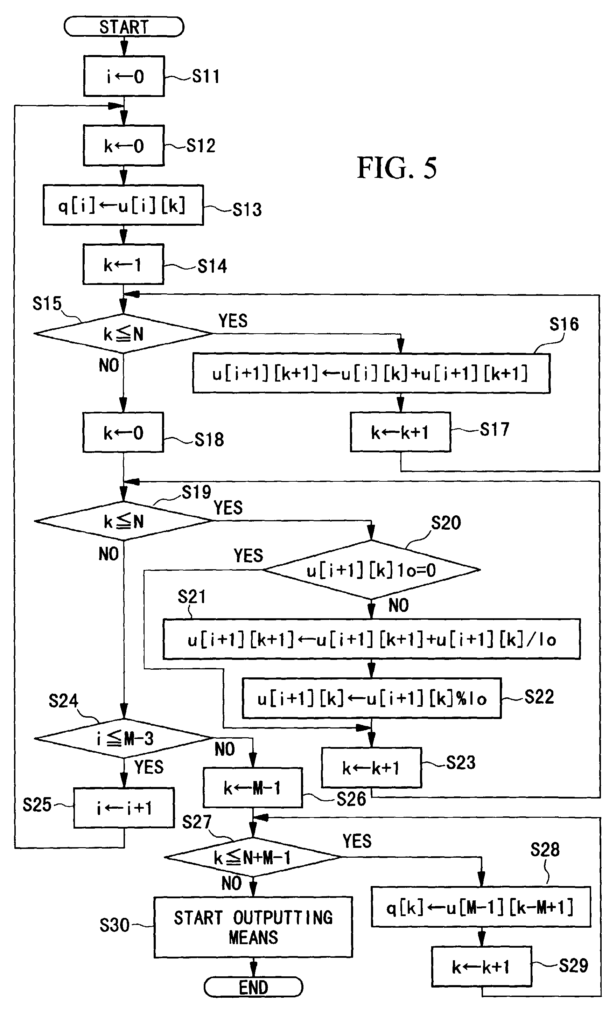

Next, a description will be given of the pair-down operation unit 13. Upon actuation by the partial product calculation unit 12, the pair-down operation unit 13 obtains N and M values from the input memory 15, and starts the processing shown in Fig. 5 after securing an area of an array q having a number N+M of array elements q[0] to q[N+M-1] in the output memory 17.

In Fig. 5, the pair-down operation unit 13 first initializes an internal variable i to 0 (step S11), and repeats loop operations of steps S12 to S25 until the variable i exceeds M-3. Then, the pair-down operation unit 13 initializes an internal variable k to M-1 (step S26), and repeats loop operations of steps S27 to S29 until the variable k exceeds N+M-1. After the output unit 14 is started (step S30), the process comes to an end.

Each loop operation of steps S12 to S25 is equivalent to processing performed to sequentially calculate numerical values of digits constituting a product Q by executing slant addition and carrying for partial products in the order from a partial product of an order 0 of the multiplier Y to a partial product of an order M-1 with two partial products adjacent to each other set as a pair. A numerical value of one digit constituting the product Q is calculated by one loop. A specific processing example is described below.

First, the internal variable k is set to 0 (step S12), and the value of an array element u[0][0] of the array p[0] on the work memory 16 is outputted as the value q[0] of the order 0 of the product Q to the output memory 17 (step S13).

Subsequently, the internal variable k is initialized to 1 (step S14), and the loop operations of steps S15 to S17 are continued until the varible k exceeds N. Then, the varible k is intialized to 0 (step S18), and the loop operations of steps S20 to S23 are continued until the variable k exceeds N.

In each loop operation of steps S15 to S17, slant addition is performed by setting two partial products of orders adjacent to each other as a pair. Under the condition of the variable i=0, specific processing is as follows.

An added value of the array element u[0][1] of the array p[0] and the array element u[1][0] of the array p[1] is rewritten into an array element u[1][0] of the array p[1] (step S16). In Fig 4, because of u[0][1]=2 and u[1][0]=1, the u[1][0] is updated to 3. Then, by adding +1 to k to set 2 (step S17), the processing of step S16 is executed again, and an added value of the array element u[0][2] of the array p[0] and the array element u[1][2] of the array p[1] is rewritten into an array element u[1][2] of the array p[1]. As shown in Fig 4, because of u[0][2]=8 and u[1][1]=7, u[1][1] is updated to 15. Thereafter, similarly, the added value 15 of the value 7 of the array element u[0][3] and the value 8 of the array element u[1][2] is rewritten into an array element u[1][2], and the added value 12 of the value 2 of the array element u[0][4] and the value 10 of the array element u[1][3] is rewritten into the element u[1][3]. Then, by adding +1 to k to set 5, the continuation condition of k( N is not satisfied, and thus the process moves from step S15 to step S18.

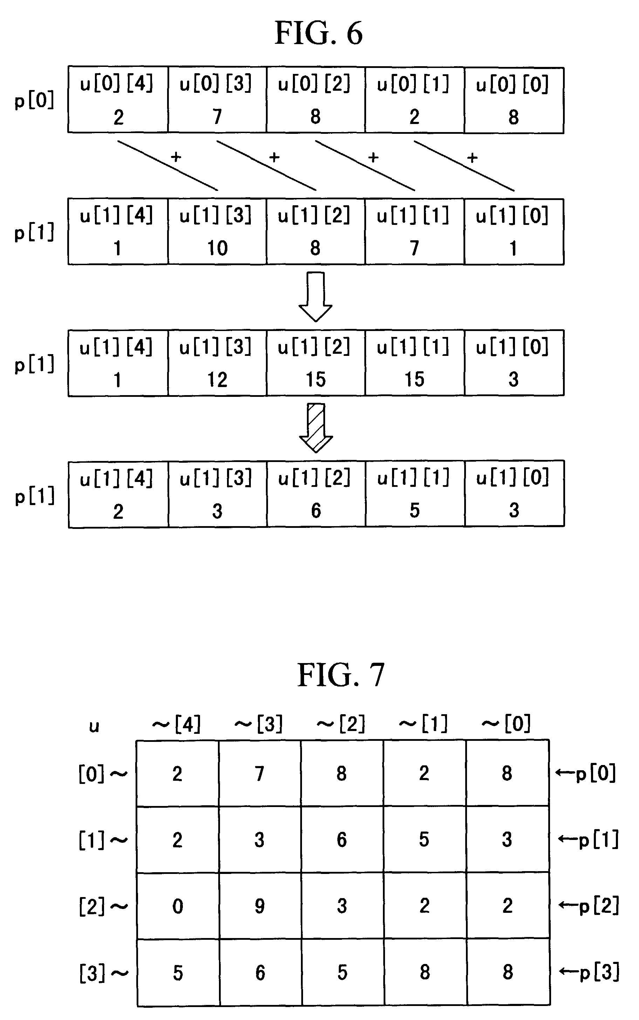

Fig 6 schematically illustrates the slant operation performed for the partial products by the loop operations of steps S15 to S17. In the drawing a slant line is called a slant addition symbol, indicating a pair of array elements to be added. The array elements of the pair mean ones having equal total values of first and second indexes in the embodiment In other words, the loop operation is equivalent to calculation of a sum of two partial products. But no shifting operations are carried out for digit matching and, as shown in the schematic drawing only a slant method, i.e., addition is performed for array elements of k-1-th and k-th between two arrays having equal numbers of array elements. Such addition is called slant addition in this specification. If conversion is made into 1 digit at the time of partial product calculation, slant addition is limited to 2 figures from 0-9, and thus the sum does not exceed 18. Since the sum of 10 to 18 is set as an order of 1 digit in a down operation after the pair operation, there are no vertical additions of several hundreds, several thousands, several tens of thousands, and so on. As a result without any large carrying high-speed and highly accurate multiplication can be obtained by the pair-down slant addition.

Next, a description will be given of the loop operations of steps S19 to 23. Each of these loop operations is equivalent to processing performed to convert a value of each array element of the array p[1] updated by the slant addition into 1 digit. First, depending on whether the quotient obtained after division of an array element u[1][10] of the array p[1] by 10 is 0 or not, it is checked whether the value of the array element has 2 digits or 1 digit (step S20). If it is found to be 1 digit, as no conversion into 1 digit is necessary for the element, +1 is added to k to set 1 in order to process the next array element u[1][1] (step S23). If it is found to be 2 digits, the added value of the quotient obtained after division of the array element u[1][0] by 10 and the value of its adjacent array element u[1][1] are overwritten on the adjacent array element u[1][1] (step S21). For the array element u[1][0], the residual after division of its value by 10 is overwritten (step S22). In other words, carrying is performed for the array element u[1][0]. Then, +1 is added to k to set 1 in order to process the next array element u[1][1] (step S23). In the case shown in Fig 6, the value of u[1][0] after the slant addition is 3, having 1 digit, and steps S21 and S22 are not executed.

For the next array element u[1][1], carrying is executed since the value thereof is 15, and the value 5 is set as shown by the array p[1] in the lower part of Fig. 6. At this time, the value of an array element u[1][2] is 16, but the value 6 is set by carrying. Accordingly, by performing sequential carrying all the array elements u[1][0] to u[1][4] of the array p[1] are converted into 1 digit as shown by the array p[1] in the lower part of Fig 6.

After the processing for the arrays p[0] and p[1] set as a pair, +1 is added to the variable i to set 1 (step S25). Then, returning to step S12, the process repeats the processing similar to that for the arrays p[0] and p[1] by setting the array p[1] subjected to 1 digit conversion and its next array p[2] as a pair this time. In step S13 of this processing u[1][0] of the array p[1] is stored as a value of the order 1 of the product Q in q[1] of the array q. Then, in the loop operations of steps S15 to S17, slant addition is performed to add values of array elements having equal sums of first and second indexes of the arrays p[1] and p[2] and overwrite the result of the addition in the array p[2]. In steps S19 to S23, each array element of the array p[2] is converted into 1 digit.

In the foregoing manner, similar processing is repeated while switching pairs in sequence. After the array p[M-2] subjected to 1 digit conversion and the last array p[M-1] are set as a pair, a value of the variable i is 2, and the condition of i≦M-3 is not satisfied. Thus, the process leaves the loop of steps S12 to S25, and moves to step S26. By this time, the numerical values of the digits from the order 0 of the product Q to the order M-2 have been calculated and stored in q[0] to q[M-2] of the array q, and the last array p[M-1] has been subjected to 1 digit conversion. Thus, the values of the digits of orders M-1 or more of the product Q have been stored in the array p[M-1]. As a result, in the multiplication example of the multiplicand X, 6957, and the multiplier Y, 8134, q[0]=8, q[1]=3 and q[2]=2 are obtained. The state of the array p[0] to p[3] is like that shown in Fig. 7, and the value of the digits of 3 orders or more of the product Q is stored.

Then, in step S26, the variable k is initialized to M-1, and the loop operations of steps S27 to S29 are repeated until the value of the variable k exceeds N+M-1. In this way, a value stored in the array p[M-1] is outputted as a value constituting the product Q to the array q. Specifically, first, the value of u[M-1][0] of the array p[M-1] is stored in q(M-1] (step S28), +1 is added to k to set M (step S29), and then the value of u[M-1][1]is stored in q[M]. The above processing is repeated thereafter until u[M-1][N] is set to q[N+M-1]. Thus, q[3]=8, q[4]=8, q[5]=5, q[6]=6 and q[7]=5 are realized. Subsequently, the pair-down operation unit 13 starts the output unit 14 (step S30).

The output unit 14 reads the array q from the output memory 17, and outputs the same to the output device 3. If the value of q[N+M-1] of the array q is 0, outputting of the value of its array element may be omitted.

### [Second Embodiment]

Next, a detailed description will be given for another embodiment of the present invention with reference to the accompanying drawings.

In the foregoing first embodiment, after the partial product calculation unit 12 stores the arrays of the partial products of all the orders of the multiplier Y in the work memory 16, processing by the pair-down operation unit 13 is started. In the second embodiment, however, by alternately executing storage of arrays related to partial products by the partial product calculation unit 12 and processing by the pair-down operation unit 13 in synchronization, the number of arrays to be stored in the work memory 16 at one time is limited to 2, and thus a reduction can be made in a necessary storage capacity. For the sake of convenience, the second embodiment is also described hereinbelow by giving an example of a case where a product Q, 56588238, is obtained by performing multiplication of the multiplicand X, 6957, having 4 digits based on a decimal number by the multiplier Y, 8134.

After the entry of the multiplicand X and the multiplier Y from the input device 2, the input unit 11 checks the numbers of digits for the multiplicand X and the multiplier Y. The input unit 11 stores the number of digits N[4] of the multiplicand X and the number of digits M[4] of the multiplier Y in the input memory 15 as shown in Fig.2, and also stores arrays x and y respectively of the multiplicand X and the multiplier Y. Then, the partial product calculation unit 12 is started.

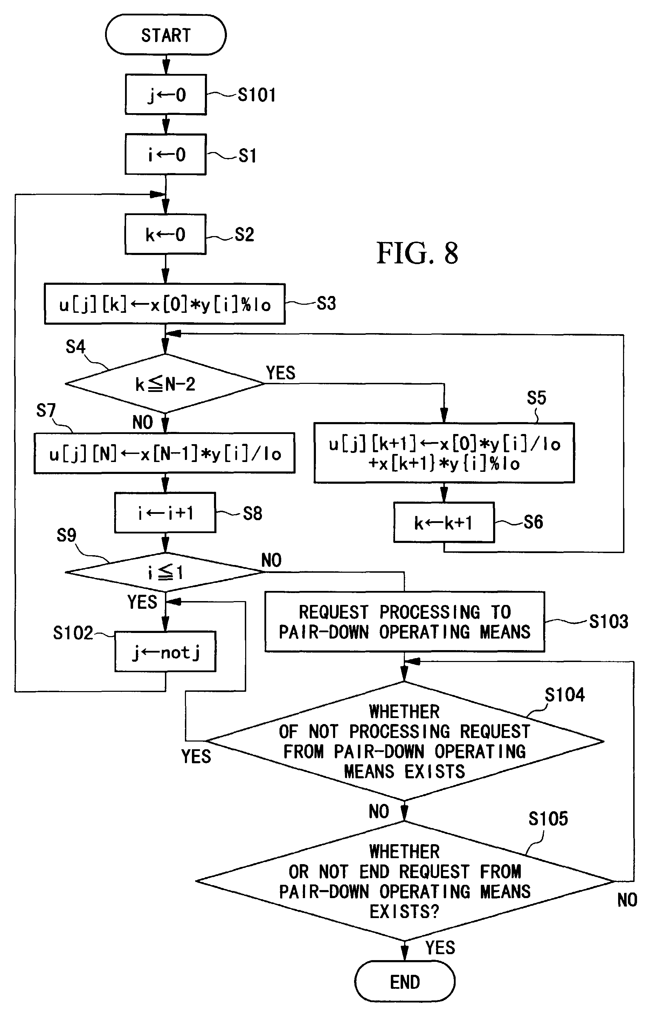

Irrespective of the value of M in the input memory 15, the partial product calculation unit 12 secures the areas of two arrays p[0] and p[1] in the work memory 16, and then starts the processing shown in Fig 8. Here, the numbers of array elements of the arrays p[0] and p[1] are equal to each other, which is N+1, and one array element has the capacity to store a numerical value of 2 digits. For example, when a numerical value of 1 digit based on a decimal number is represented by a binary coded decimal (BCD), each array element has a size of 4 bits × 2=8.

The processing shown in Fig. 8 is basically similar to that shown in Fig. 3. However, to alternately use the arrays p[0] and p[1] for a plurality of partial products and so on, partial addition and correction are made. The added steps are S101 to S105, and the corrected steps are S3, S5, S7 and S9. An internal variable j operated in step S101 is for selection of the array p[0] or p[1], and takes a value of 0 or 1. The symbol notj shown in step S102 takes the inverted value of j: notj=0 when j=1, and notj=1 when j=0. The internal variable j specifically appears as a first index of an array element u of an array p[j] as shown in steps S3, S5 and S7.

As shown in Fig. 8, the partial product calculation unit 12 initializes the internal variable j to 0, and also the internal variable i to 0 (steps S101, S1). Then, by repeating the loop operations of steps S2 to S9 and S102 twice, the partial product calculation unit 12 calculates two partial products and stores these products in the work memory 16, and then requests processing to the pair-down operation unit 13 (step S103). Subsequently, for each processing request made from the pair-down operation unit 13 to calculate a partial product (step S104), the next partial product is calculated and stored in the work memory 16, and processing is requested to the pair-down operation unit 13 (steps S102, S2 to S9 and S103). Then, when an end request comes from the pair-down operation unit 13 (step S105), the processing is finished.

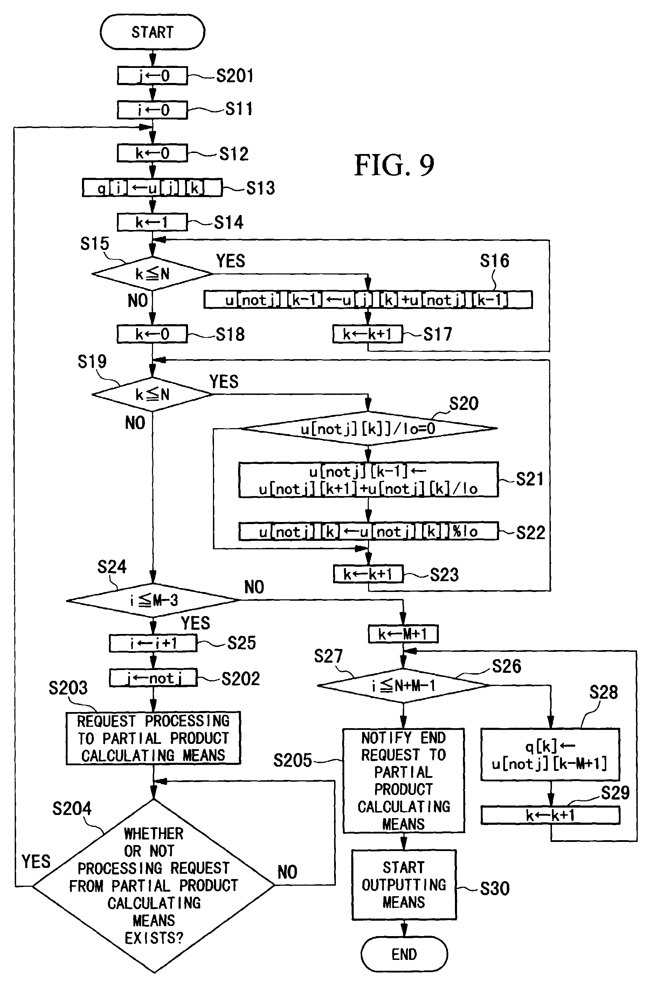

On the other hand, the pair-down operation unit 13 is actuated upon receiving a first processing request from the partial product calculation unit 12. The pair-down operation unit 13 obtains N and M values from the input memory 15, and starts the processing shown in Fig. 9 after securing an area of an array q having a number N+M of array elements q[0] to q[N+M-1] in the output memory 17.

The processing of Fig. 9 is basically similar to that shown in Fig. 5. However, to alternately use the arrays p[0] and p[1] for a plurality of partial products and so on, partial addition and correction are made. The added step are S201 to S205, and the correction step are S16, S20 to S22 and S28. As shown in Fig .9, the pair-down operation unit 13 first initializes the internal variable j to 0, and also the internal variable i to 0 (steps S201, and S11). Then, the pair-down operation unit 13 performs processing of steps S12 to S25 and S202, slant addition and 1 digit conversion for one pair, and requests the partial product calculation unit 12 to calculate a partial product (step S203). Then, the pair-down operation unit 13 stands by for a processing request from the partial product calculation unit 12 (step S204), and returns to step S12 upon receiving the request to execute slant addition and 1 digit conversion for the next pair. After the completion of processing for the last pair (NO in step S24), the internal variable k is initialized to M-1 (step S26). The , the loop operations of steps S27 to S29 are repeated until the variable k exceeds N+M-1, and an end request is sent to the partial product calculation unit 12, simultaneously starting the output unit 14 (steps S20 and S30). Then, the process comes to an end.

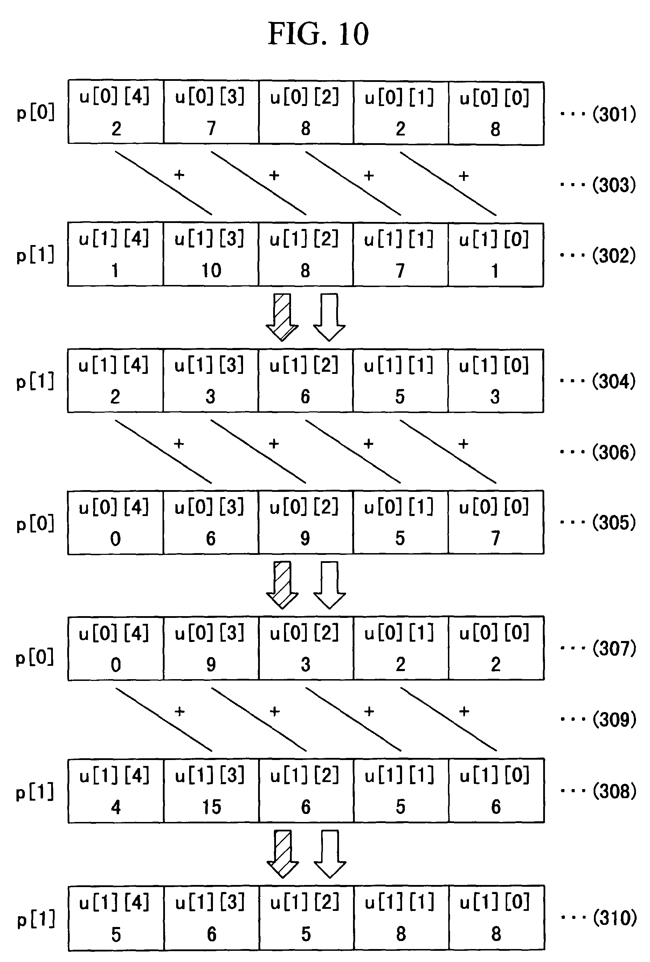

Fig 10 illustrates transitions of values of the arrays p[0] and p[1] in the work memory 16 in the multiplication process of the multiplicand X, 6957, and the multiplier Y, 8134.

Since the partial product calculation unit 12 initializes the variable j to 0 at the time of starting processing the partial product 27828 of a numerical value [4] of the order 0 of the multiplier Y and the multiplicand X, 6957, which is obtained by the first round of execution of steps S2 to S7, is stored in the array elements u[0][4], u[0][3], u[0][2], u[0][1] and u[0][0] of the array p[0] (301 of Fig. 10). Since the second round of execution of steps S2 to S7 (execution under i=1) is performed after j is inverted to 1 in step S102, the partial product 110871 of a numerical value 3 of the order 1 of the multiplier Y and the multiplicand X, 6957, is stored in the array elements u[1][4], u[1][3], u[1][2], u[1][1] and u[1][0] of the array p[1] (302 of Fig. 10). At this time, a processing request is made from the partial product calculation unit 12 to the pair-down operation unit 13 (step S103). At the time of making the processing request; the value of the variable j in the partial product calculation unit 12 is 1.

Since the pair-down operation unit 13 initializes the variable j to 0 at the time of starting the processing in the first round of steps S12 to S23, first a value [8] of u[0][0] of the array p[0] is set to q[0] in step S13. Slant additions of steps S14 to S17 are carried out as shown by 303 of Fig 10, and 1 digit conversion of steps S18 to S23 is executed for the array p[1]. As a result, transition is made for the array p[1] as indicated by 304 of Fig 10. Then, the pair-down operation unit 13 inverts the variable j to 1 (step S202), and requests the partial product calculation unit 12 to calculate the next partial product (step S203).

Upon having received the above request (step S104), the partial product calculation unit 12 inverts the variablej to 0. As a result; the partial product 06957 of a numerical value 1 of the order 2 of the multiplier Y and the multiplicand X, 6957, which is obtained by a third round of execution of steps S2 to S7 (execution under i=2), is stored in the array elements u[0][4], u[0][3], u[0][2], u[0][1] and u[0][0] of the array p[0] (305 of Fig. 10). Then, processing is requested to the pair-down operation unit 13 (step S103).

Since the current value of the variable j is 1, the pair-down operation unit 13 first sets the value 3 of u[1][0] of the array p[1] to q[1] in step S13 in the second round of execution of steps S12 to S23. The slant additions of steps S14 to S17 are carried out like those indicated by 306 of Fig.10, and 1 digit conversion of steps S18 to S23 is executed for the array p[0]. As a result; transition is made for the array p[0] like that indicated by 307 of Fig. 10. Then, the pair-down operation unit 13 inverts the variable j to 0 (step S202), and requests the partial product calculation unit 12 to calculate the next partial product (step S203).

Upon having received the above request (step S104), the partial product calculation unit 12 inverts the variable j to 1. As a result, the partial product 415656 of the numerical value 8 of the order 3 of the multiplier Y and the multiplicand X, 6957, which is obtained by a fourth round of execution of steps S2 to S7, is stored in the array elements u[1][4], u[1][3], u[1][2], u[1][1] and u[1][0] of the array p[1] (308 of Fig. 10). Then, processing is requested to the pair-down operation unit 13 (step S103).

Since the current value of the variable j is 0, the pair-down operation unit 13 first sets the value 2 of u[0][0] of the array p[0] to q[2] in step S13 in the third round of execution of steps S12 to S23 (execution under i=2). Slant additions of steps S14 to S17 are carried out like those indicated by 309 of Fig. 10, and 1 digit conversion of steps S18 to S23 is executed for the array p[1]. As a result, transition is made for the array p[1] like that indicated by 310 of Fig 10. Since all the pair operations have been completed (NO in step S24), the pair-down operation unit 13 moves to processing of step S26 and thereafter.

Since the current value of the variable j is 0, in the loop operations of steps S27 to S29, the value 56588 stored in the array p[1] placed in a state indicated by 301 of Fig. 10 is outputted as q[3] to q[7].

### [Third Embodiment]

In the foregoing first and second embodiments, a product is calculated for the multiplicand X and the multiplier Y, which are represented by decimal numbers. In the third embodiment, however, a product is calculated for a multiplicand X and a multiplier Y, which are represented by binary numbers. The calculation process is described hereinbelow.

The constitution of a computer of the third embodiment is the same as that of the computer shown in Fig 1. The multiplicand X and the multiplier Y entered from the input device 2 and the numbers N and M of digits thereof are stored in the input memory 15. For each order in the multiplier Y stored in the input memory 15, the partial product calculation unit 12 calculates a partial product as a multiplied value of a numerical value of the order and the multiplicand X, and stores the partial product in the work memory 16. Since the multiplicand and the multiplier am both binary numbers in the embodiment, calculation of this partial product is carried out based on the following algorithm:
X · 0=0
X · 1=X
Specifically, bit patterns of partial products are all 0 when the numerical value of a given order of the multiplier Y is 0. Bit patterns of partial products are equal to X when a numerical value of the order of the multiplier Y is 1.

These partial products are stored in the arrays p[0] p[1]..., p[M-1].

Each p[k] (0≦k≦M-1) of the partial products is also an array, and the array elements thereof are respectively u[k][N], u[k][N-1],..., u[k][0]. Since the number of digits for the multiplicand X is N, the maximum number of digits for each partial product is also N. Each partial product is stored in u[k][N-1],..., u[k][N] and, at this time, 0 is stored in the most significant u[k][N]. This u[k][N] is provided as an area for storing a numerical value based on carrying from a least significant digit in later calculation.

First, a least significant digit of p[0], i.e., a value of u[0][0] is stored in q[0] in the output memory 17, and slant (pair) operation and 1 digit conversion (down) of a result of the operation are performed between p[0] and p[1] by the pair-down operation unit 13. As a result, a binary number of N+1 digits is stored as p[1]*.

Herein, the pair operation means addition of a binary number subjected to 1 digit conversion, and the down operation means high-speed 1 digit conversion for a sum of 2-digit addition. A high-speed pair operation can be achieved by executing all slant additions of respective digits in parallel. The addition in this case is performed based on the following algorithm:
0+0=0
0+1=1
1+0=1
1+1=10

Subsequently, the least significant digit of p[1]* is stored in q[1], and p[2]* is obtained by the pair-down operation of p[1]* and p[2]. The least significant digit of p[2]* is stored in q[2], and p[3]* is obtained from p[²]* and p[3]. Similar processing is continued thereafter until p[M-1]* is obtained from p[M-2]* and p[M-1].

With such a pair-down operation carried out an M-1 number of times, the product Q of the multiplicand X and the multiplier Y is given in the following manner:
Q=p[M-1]*q[M-2]q[M-3]...q[0]

Next, a description will be given of the foregoing multiplication process by providing a specific example. For the specific examples of the multiplicand X and the multiplier Y, the following numerical values having 9 digits and 4 digits represented by binary numbers are taken:
Multiplicand X=111110111
Multiplier Y=1111

The state of storing the multiplicand X, the multiplier Y and the numbers N and M of digits thereof in the input memory 15 is as follows:
x[0]=1, x[1]=1, x[2]=1, x[3]=0, x[4]=1, x[5]=1, x[6]=1, x[7]=1, x[8]=1
y[0]=1,y[1]=1,y[2]=1,y[3]=1
N=9, M=4

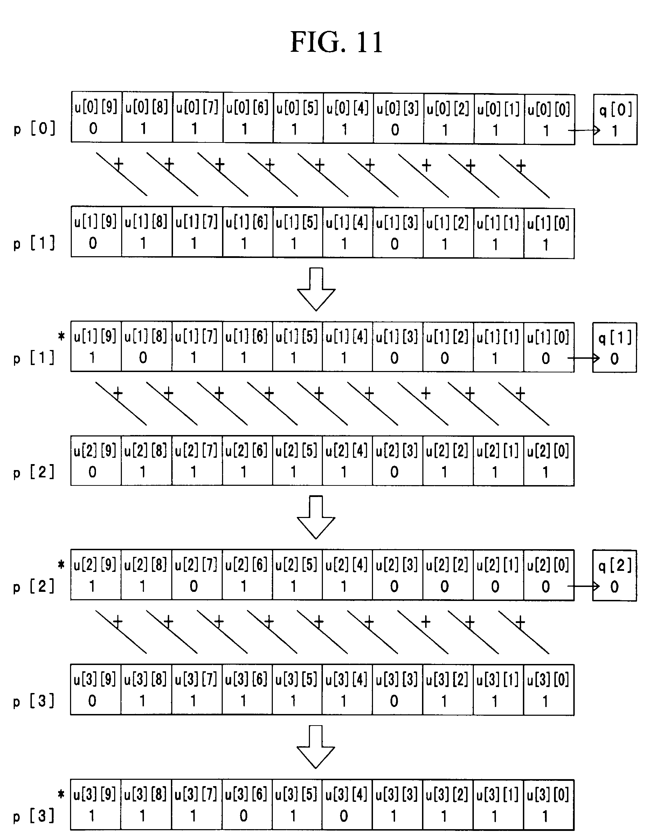

Fig. 11 illustrates the values stored in the work memory 16 and the output memory 17 in the process of executing multiplication.

Here, since respective digits of the multiplier Y, i.e., y[0], y[1], y[2] and y[3], are all equal to 1, the partial products thereof become X, in other words [111110111]. Thus, as shown in Fig 11, the array elements of the array u[0] are respectively as follows:
u[0](9]=0, u[0][8]=1, u[0][7]=1, u[0][6]=1, u[0][5]=1, u[0][4]=1, u[0][3]=0, u[0][2]=1, u[0][1]=1, u[0][0]=1
For the arrays p[1], p[2] and p[3], similar values are stored.

Then, first, a least significant digit of p[0], i.e., a value [1] of u[0][0] is stored in q[0], a pair-down operation is performed between p[0] and p[1] by the pair-down operation unit 13, and its result is stored as p[1]*. As a result the array elements of p[1]* take the following values:
u[0][9]=1, u[0][8]=0, u[0][7]=1, u[0][6]=1, u[0][5]=1, u[0][4]=1, u[0][3]=0, u[0][2]=0, u[0][1]=1, u[0][0]=0

Similarly thereafter, the pair-down operation unit 13 performs pair-down operations between p[1]* and p[2] and between p[2]* and p[3] in sequence. As a result q[1] and q[2] are stored in the output memory 17, and p[k+1] is stored in the work memory 16.

Therefore, the following is obtained as the product Q of the multiplicand X and the multiplier Y:
Q=p[3]* q[2] q[1] q[0]

In other words, the following is obtained:
Q=1110101111001
Then, this product Q is outputted by the output unit 14 to the output device 3.

Next, a description will be given for the multiplicand X and the multiplier Y by providing another example. The following figures are used for the multiplicand X and the multiplier Y having 6 digits respectively:
Multiplicand X=111011
Multiplier Y=101011

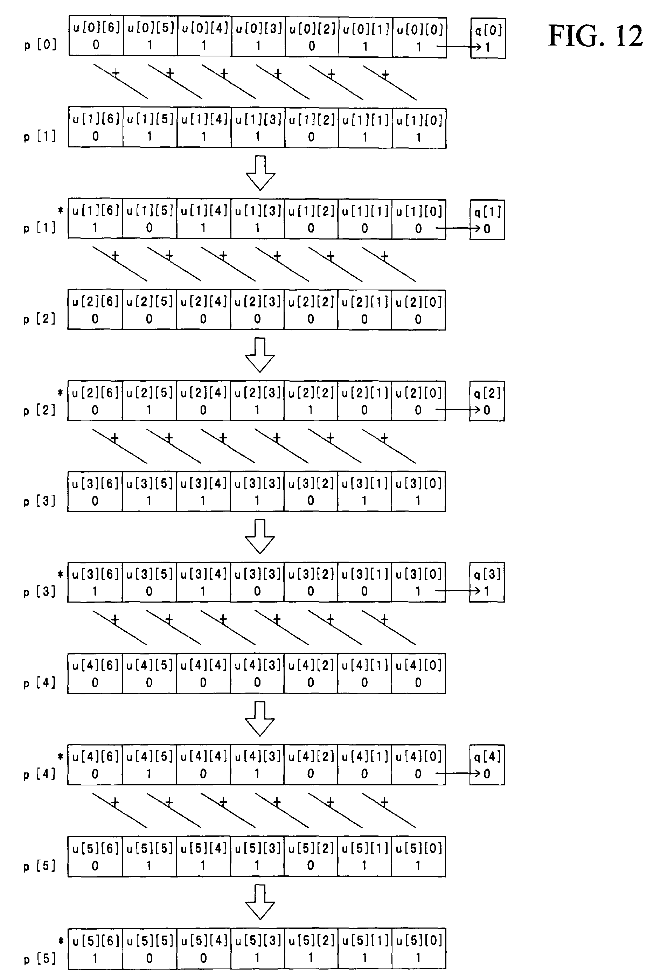

Fig 12 illustrates the values stored in the work memory 16 and the output memory 17 in the process of executing multiplication.

Here, since the respective digits of the multiplier Y, i.e., y[0], y[1], y[3] and y[5] are equal to 1 and y[2] and y[0] are equal to 0, the partial products calculated by the partial product operation unit 12 and stored in the work memory 16 are as follows:
p[0]=p[1]=p[3]=p[5]=111011
p[2]=p[4]=000000

As shown in Fig. 12, first, the least significant digit of p[0], i.e., a value [1] of u[0][0], is stored in q[0], and p[1]*=1011000 is calculated by a pair-down operation between p[0] and p[1]. Then, the value [0] of u[1][0] as the least significant digit of this p[1]* is stored in q[1], and p[2]*=0101100 is calculated by a pair-down operation between p[1]* and p[2]. Then, the value [0] of u[2][0] as the least significant digit of this p[2]* is stored in q[2], and p[3]*=1010001 is calculated by a pair-down operation between p[2]* and p[3]. Then, the value [1] of u[3][0] as the least significant digit of this p[3]* is stored in q[3], and p[4]*=0101000 is calculated by a pair-down operation between p[3]* and p[4]. Then, the value [0] of u[4][0] as the least significant digit of this p[4]* is stored in q[4], and p[5]*=1001111 is calculated by a pair-down operation between p[4]* and p[5].

As a result, the following is obtained as the product Q of the multiplicand X and the multiplier Y:
Q=p[5]* q[4] q[3] q[2] q[1] q[0]

In other words, the following is obtained:
Q=100111101001
Then, the product Q is outputted by the output unit 14 to the output device 3.

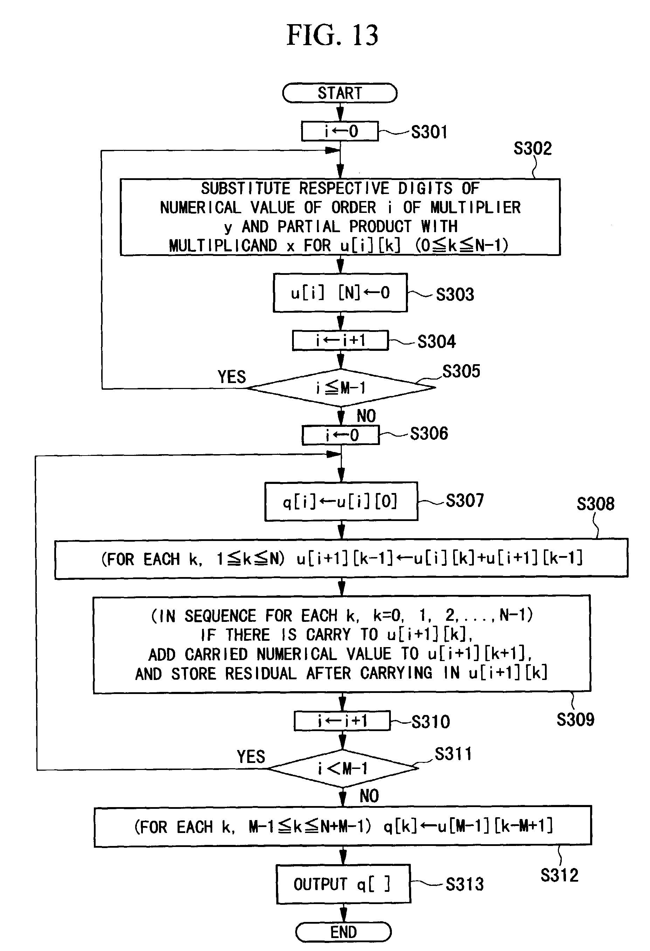

Fig. 13 is a flowchart showing the procedure for performing the foregoing multiplication. In steps S301 to S305 of Fig. 13, for each i (0≦i≦M-1), the partial product of the numerical value of the order i of the multiplier Y and the multiplicand X is stored in an array u[i][], i.e., an array p[i]. The value 0 is stored in the most significant digit of each partial product, i.e., u[i][N].

Then, in step S306, the index i of the array is initialized to 0. In step S307, the least significant digit in the process of a pair-down operation, i.e., u[i][0], is stored in q[i] for outputting. Then, in step S308, a slant operation is performed (pair operation) and after its result is temporarily stored, the carded numerical values are propagated in order from a lower-order digit to an upper-order digit (down operation). Then, in step S310, the index i is incremented, and the pair-down operations of steps S307 to S310 are repeated while the condition i<M-1 is satisfied.

Subsequently, in step S312, the last solution is stored in the array q[ ], and this last solution is outputted in step S313.

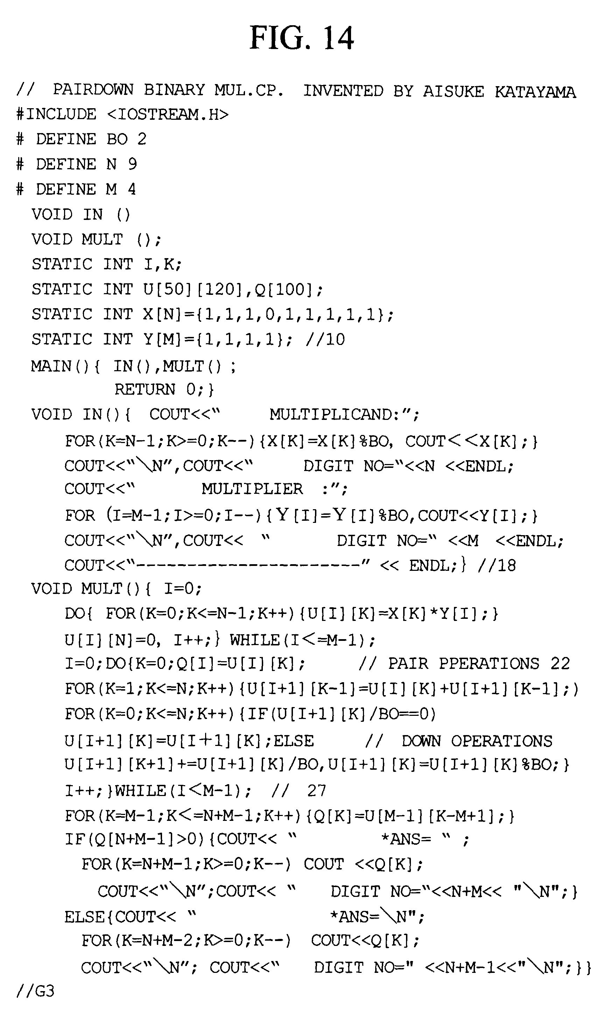

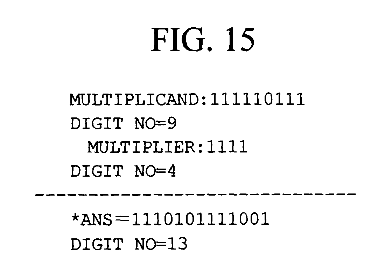

Fig. 14 shows an example of a program source list described in the C++ language based on the procedure shown in the flowchart of Fig. 13. In this program, the product of the multiplicand 111110111 (X) and the multiplier 1111 (Y) represented by binary numbers is calculated without any errors by using a pair-down operation. Fig. 15 shows the execution result output of the program shown in Fig 14.

### [Forth Embodiment]

The forth embodiment is totally independent of any hardware implementation.

In the description of this invention, a usual multiplier is calculated by the additions of shifted partial products as follows: 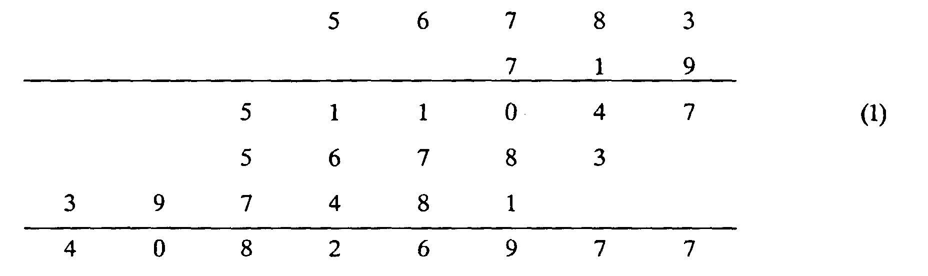 This simple example is showing the multiplication, but for large multiplier the numbers of the partial products become large and shift numbers also increase, the product digits are obtaining by the repeated additions.

The partial product arrays are as follows: 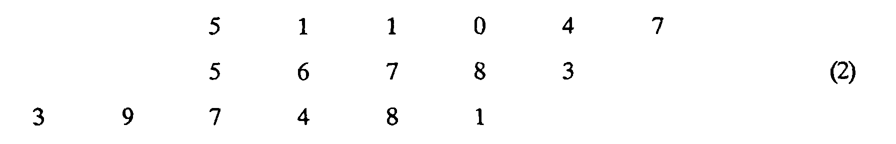 These arrays are shifted and not equal lengths.

When the multiplicand digit length is N=5, then the digit length is N+1 or N in usual cases. In the present invention we have forced to provide only one kind digit length of N+1. THE inventive multiplier is a multiplier of capable to multiply the huge numbers with fast and errorfree operation that had been impossible.

The new multiplier uses the equal length and non shift partial products. The multiplicand is shown as
x[N-1] x[N-2] ...... x[1] x[0] (3)
which is N digit decimal integer. Wherein x[O] is considered as I digit order, x[N-1] is considered as N digit order integer. Also, the multiplier
y[M-1] y[M-2] ...... y[1] y[0] (4)
which is M digit decimal integer.

In this invention, the one of the multiplier components y[O], ..., y[M-1] is selected in this order, and the multiplications performed as follows give the following two dimensional arrays

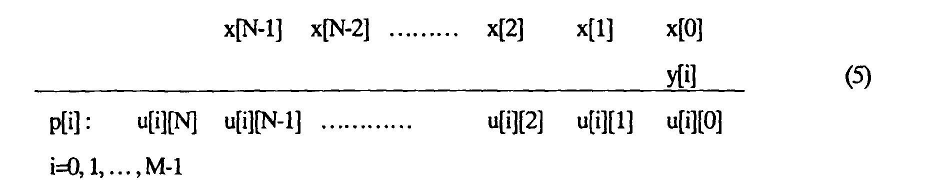

These parallel arrays have two kind subscripts such that i =0,1...,M-1 are the fist common subscripts for each arrays, and also the multiplier digit. The second subscripts are the same for all parallel arrays. Using(5) we have formallyM parallel N+1 digit arrays as shown in(5).

The multiplier digit (element) y[i] is a digit of the decimal number 0,1,...,9 used, and i=0,...,M-1; showing M parallel equilength arrays.

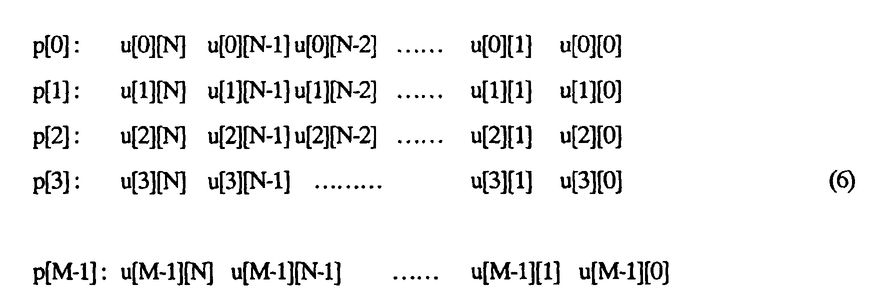

The partial product arrays (6) are differed from the previously given shifted arrays like (2). The equal length arrays elements defined from (6) are given x[N-1],..x[0]^{*}y[i], that are by partial product of N+1 or N digit order. In the case of N digit, the digit of top array element is set as 0 in the numerical arrays of (6). In (1) program, 56783*719, (2) are expressed as

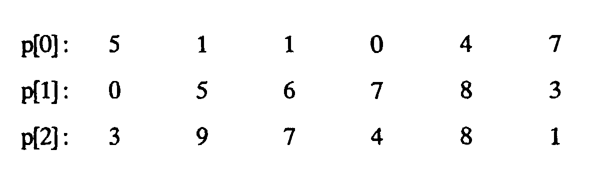

The most important features of this inventive multiplier is the abilities for the huge number multiplication in error free and extrafast. The origin of these overcome properties comes from the assignation of the pair down operations to the two dimensional equal length virtual partial product arrays of (6). The pair and down operation as shown by ')', '|' signs respectively. '()' under arrays show the digit order of the array element digit 0-9.

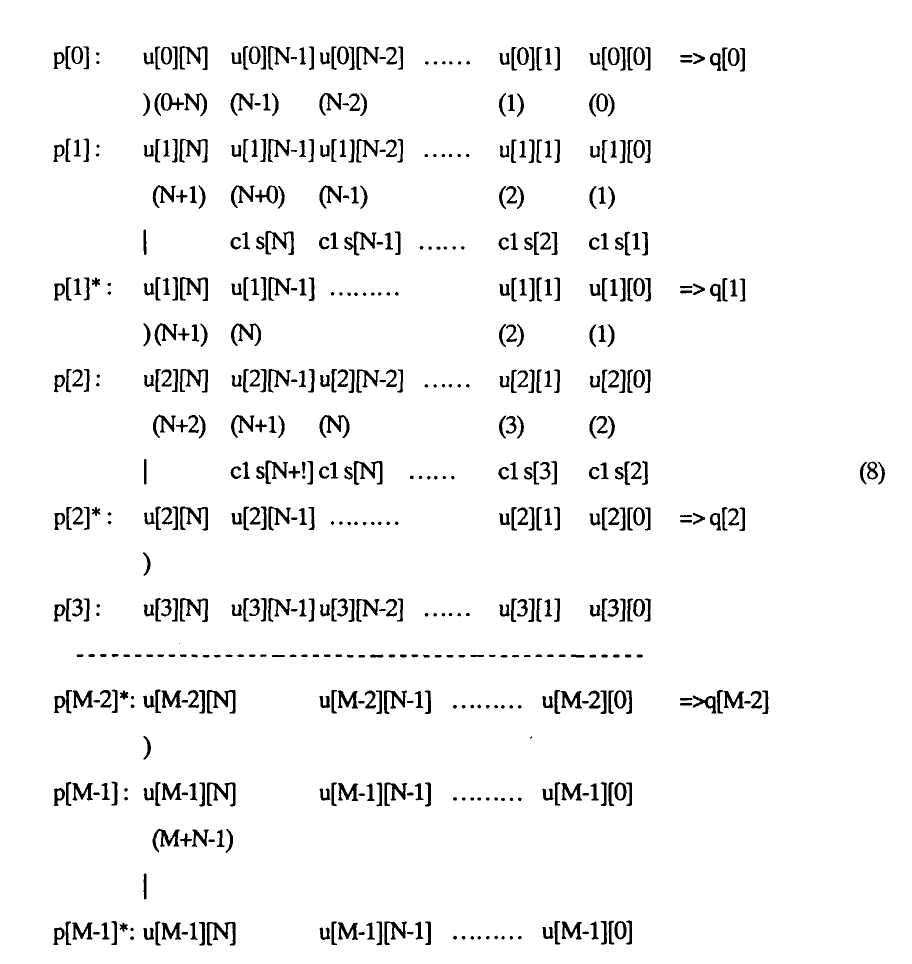

These pair down operations on the two dimensional M equal length non-shift parallel partial product arrays p[0],p[1],.......,p[M-1] give the correct ultrafast product.
product = p[M-1]* q[M-2] q[M-3] ...... q[0] (9)

The first pair operation presented by p[0], p[1] of (8) the two dimensional equal length partial product arrays. The pair operation of N slanted additions between N+1 equal length partial product arrays are shown by slash lines with + as 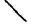 +. Because the equal length partial arrays sizes are N+1, right end array element u[0][0] of p[0] does not contain in adders, giving the low end of the product. U[0][0]=>q[0]. The left end element of p[1] does not contained in adders, partial product high end 8 may be put. N slant additions are 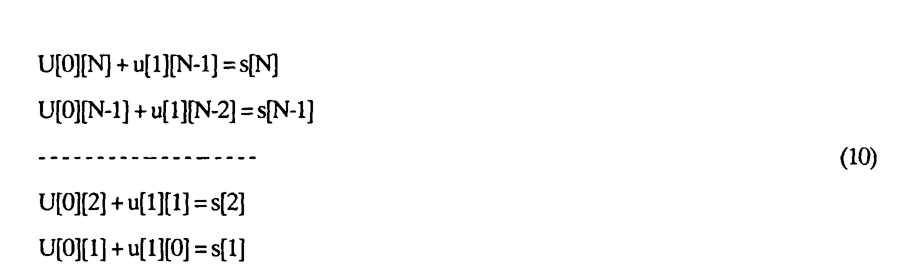 as can be seen in (8). p[0],p[1] array elements are limited to one digit decimal so 0,1,2,...,9 are set, s[N],...,s[0] are 0-18. But in the invention, the integer of [ ] in S has special digit order as (10). For instance, if N=10, s[10]=17 carryl is added to u[1][N] of p[1],and if u[1][10]=8 (highest high digit of 9*9)+1, then p[1]=9. So the constancy of the two dimensional arrays hold.

As seen in expressions in (8), first pair operation has been ended, N slant additions sums are put in lower array p[1] N elements. 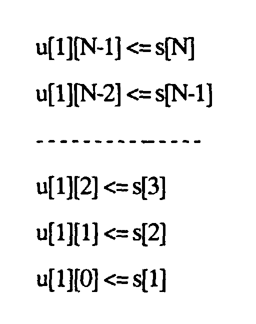 The 1 digit number in the s[] gives the digit order. And these sum terms are set N in the lower element array. s ranges 0-18.

The value s is 1 digit, then the values remain. When the value 10-18, upper digits are transferred to left upper digit element of the lower array p[1]. Lower digits of the two digit numbers are remained in the same array elements.

These sums in array compensations are performed in the down operations of after the pair operations.

The 2 dimensional equal length partial product arrays are represented as follows:

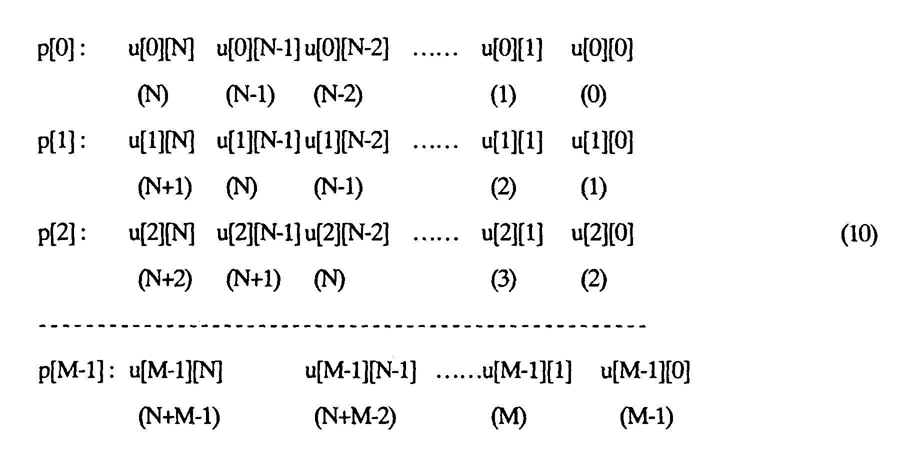

Each array holding the N+1 partial product digits corresponding to the multiplier digit sequence 0,1,..,M-1. We define the array element of decimal integer, and further define the decimal position (order) * of the decimal integer by the sum of subscripts of the each array element. In (10), to each array element, the numbers given by ( ) under arrays are the most important numbers giving the digit order giving by the up position array subscripts sum.

As can be seem from (10), p[0],p[1]arrays slant element digits have the same digit order, as shown
The subscript sum of u[0][N]=0+N=N.
The subscript sum of u[1][N-1]=1+N-1=N
are equal, so can be added.

The pair down multipliers constructed from the two dimensional N+1 equal length partial product arrays p[0],..,p[M-1] wherein the multiplicand and the multiplier am N digit decimal integer and M digit decimal integer respectively. Ultra fast and error free multiplier for huge numbers is obtained.

The first pair down operation of paired arrays of p[0], p[1] are obtained in (11) below,) showing the coupled operations of p[0], p[1] slant arrays of same subscripts sums as shown by ( ). The single digits in these slanted array elements have same digit order as shown by the integer in ( ). These slanted numbers can be added because same digit orders, as shown by 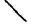 + signals at both ends. These paired arrays p[0], p[1] are N+1 digit two dimensional partial product arrays, wherein N slant down paired arrays elements can be added. 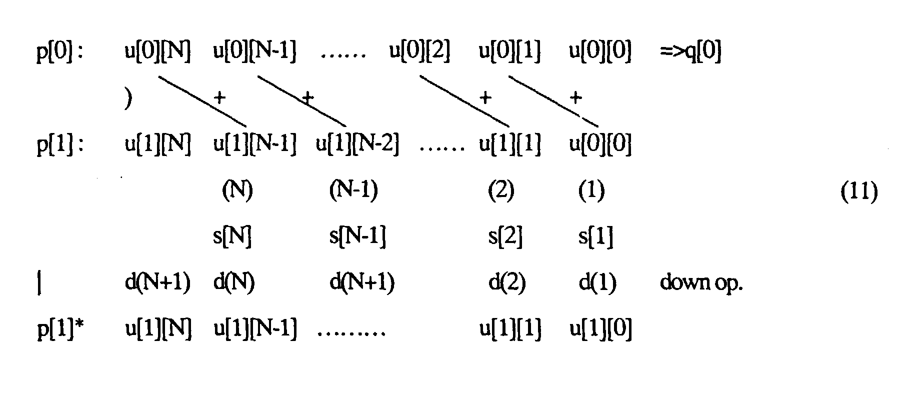 The rightmost element u[0][0] has 0 digit order.

The first pair operation presented by p[0], p[1] of (11) the two dimensional equal length partial product arrays. The pair operation of N slanted additions between N+1 equal length partial product arrays are shown by slash lines with + as 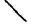 +. Because the equal length partial arrays sizes are N+1, right end array element u[0][0] of p[0] does not contain in adders, giving the low end of the product. u[0][0]=>q[0]. The left end element of p[1] does not contained in adders, partial product high end 8 may be put. N slant additions are 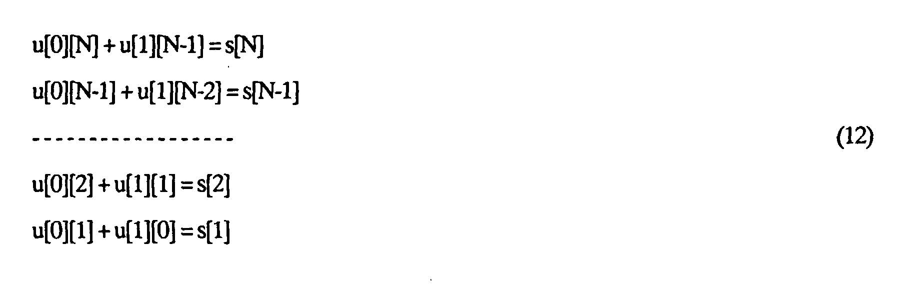 as can be seen in (8). P[0], p[1] array elements are limited to one digit decimal so 0,1,2,...,9 are set, s[N],..s[0] are 0-18. But in the invention, the integer of [ ] in S has special digit order. For instance, s[2] shows the integer in S is 2 digit order, for instance 800 order int but write integer 0-18.

Here, the first pair down array system is shown:

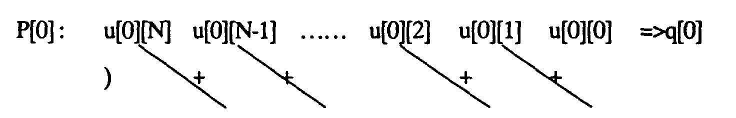

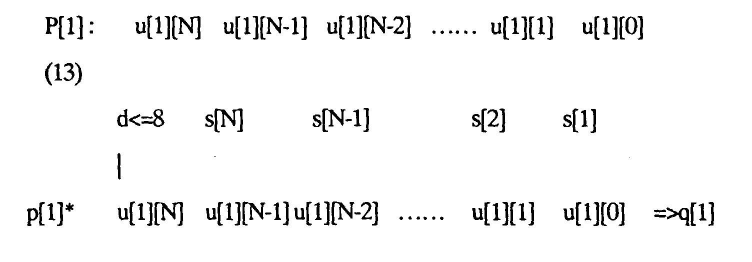

The pair operations of p[0], p[1] generate the sums having each digit order of the two dimensional equal length partial product lower array p(1). However, when s[ . ] is or are two digit number, we must have s[ . ] changed to 1 digit numbers. This process is called down operation after the pair operation. Both operations are doing in continuing fashion as following: N=4 example.

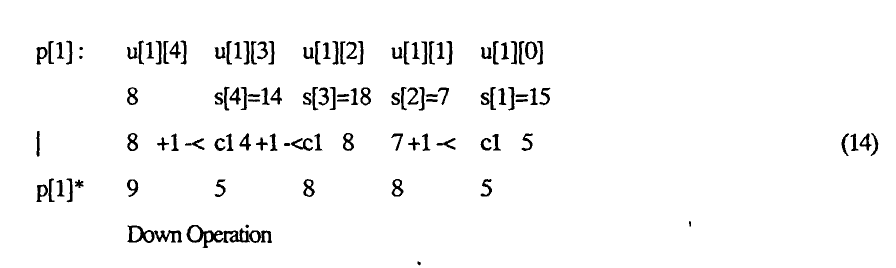

The left element u[1][4] is not pair addition element, it is belonged to the partial product array high end term and the digit 8 is the highest top value ,so 9 is the maximum value by the carry from addition section of p[1], the length of p[1] is held as N+1. In this case N+1=5. p[1]*=95885. The pair down multiplier is defined.

We had already defined the two dimensional N+1 digit equal length partial product arrays as
p[i] : u[i][N] u[i][N-1] u[i][N-2] ... u[i]j[1] u[i][0] (15)

The arrays have two kind subscripts. The first subscript is i which shows the multiplier digit such as y[i],i=0,1,...,M-1. And also at the same time, i is used in (15) with the second subscripts N, N-1,..., 0 to indicate the digit positions (orders) of the partial product digit array. For instance,, p[i] in (11), decimal digit positions (order) are (N+4 (N-1+i), ..., (2+i), (1+i),(i). p[i] array digit distribution is from i digit order to N+i digit order.

Using these N+1 digit equal length partial product arrays p[0], p[1],.p[M-1], N digit partial product and M digit multiplier, we obtain the pair down multiplier with ultrafast and errorfree for the huge number.

### PAIR DOWN MULTIPLIER

Partial explanations have been made frequently, here general descriptions will be made.
(1) The multiplicand x[N-1]x[N-2] ... x[1]x[0] and the multiplier y[M-1]y[M-2] ... y[1]y[0] are given. The separated multiplier 1 digit numbers of order i can be as y[i]. y[i], i.0,1,2,..,M-1. In the decimal integer system, y[i] takes one of 0,1,2,3,4,5,6,7,8,9 digit values.
(2) Using the two dimensional equal length N+1 digit partial product arrays p[0], p[1], ..., p[M-1] as defined in (5), (6).
(3) PAIR DOWN MULTIPLIER INVENTED uses above mentioned two dimensional equal length partial product arrays P[0], P[1], ..., P[M-1] in the following PAIR DOWN mode following: ')' indicates N slant additions between up and down pair arrays P[0], P[1]. '|' indicates down operation to lower array p[1] and resulting 1 digit array is showing with *. Right end of each PAIR array issues lower end of product digit array q[M-2]q[M-3] ... q[1]q[0].

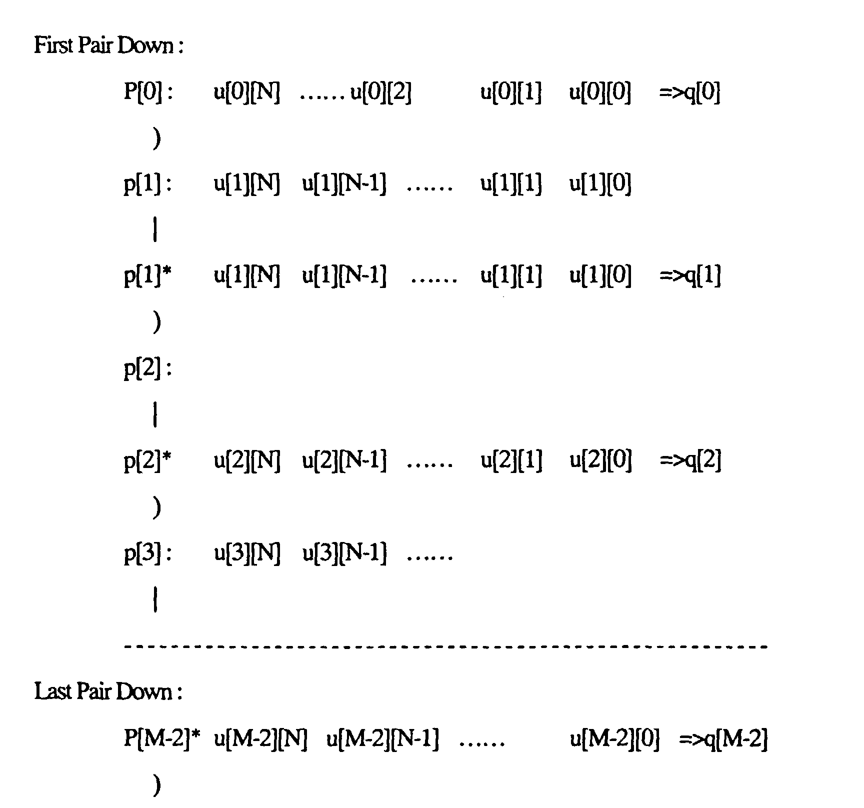

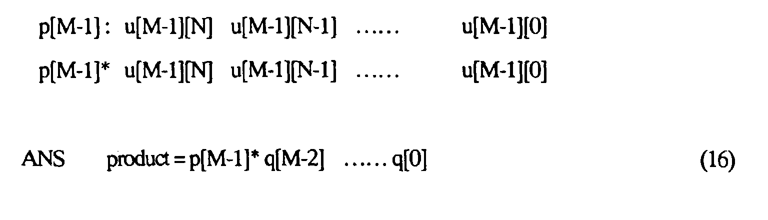

### EXAMPLES

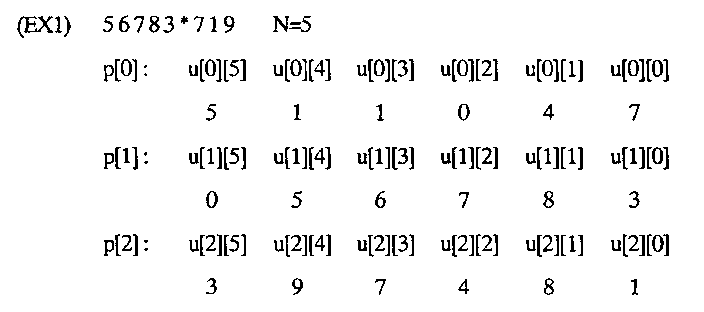

are the two dimensional equal length partial product arrays for the example of (1). We solve this by PAIR DOWN manual:

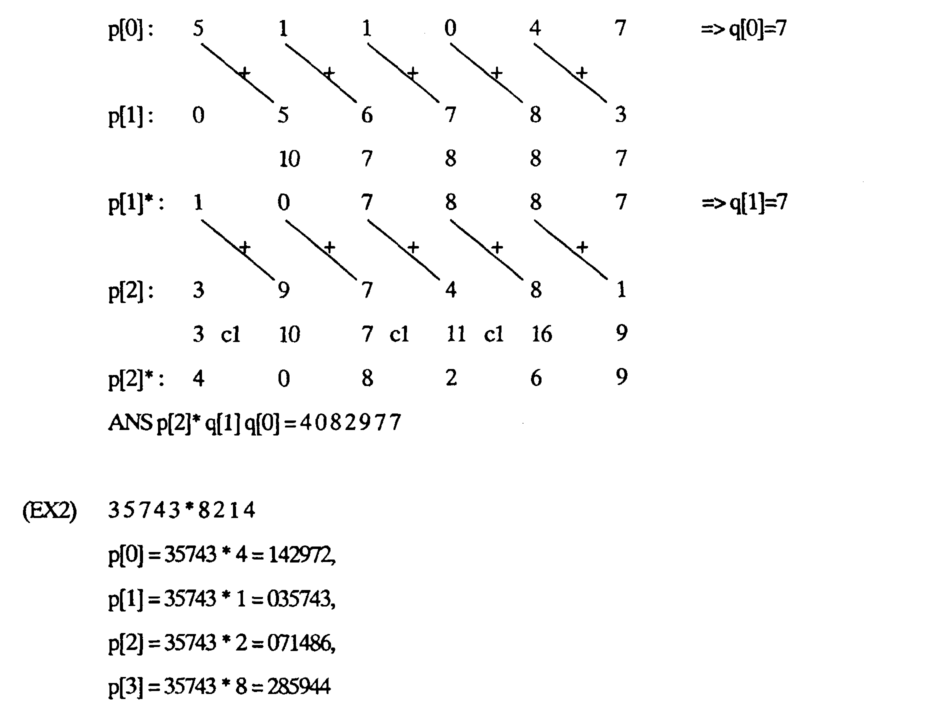

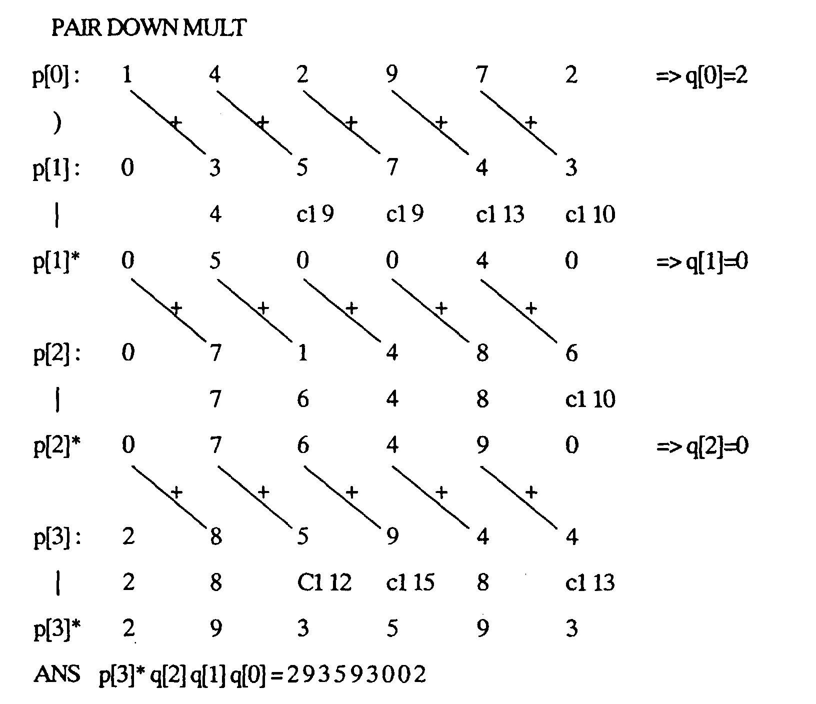

As can be seen from the examples, we can obtain by the simple calculations the huge products easily and correct.

Basic considerations on new digit order idea should be accepted, which is overlooked for the thousand years. The discussions are mainly on decimal systems, but similar treatment can easily be performed on the binary and other system.

As can be seen from the examples, we can obtain the exact solutions of the product by manually. But it is impossible to get them, in usual multipliers because of carries overloading errors and other intermediate digits count errors.

### SOFTWARE SOLUTION OF MULTIPLIER

The manual solutions above mentioned can be extended to the software versions which provide the ultraspeed and data processing.

Program name:pair-down multiplier.cp invented Oct. 25,1995 by Aisuke Katayama, Akita-Shi Akita, JAPAN.
Manuscript separate papers. By static mt x[N], y[M] are given by {, , ,}; the multiplicand and multiplier inverse arrays.

The first do-while loop give the two dimensional equal length partial product arrays. The second do-while loop define and do slant additions on the N same decimal orders digit numbers and the respective sums under 18 are put in lower array and DOWN operations (carry operations) are performed in the same loops. Lower one digit products can be separated by the for-loop after the 2nd do-while loop. High product digits determined by the second do-while results already determined.

The source list and the output of an execution result of this program are shown below. 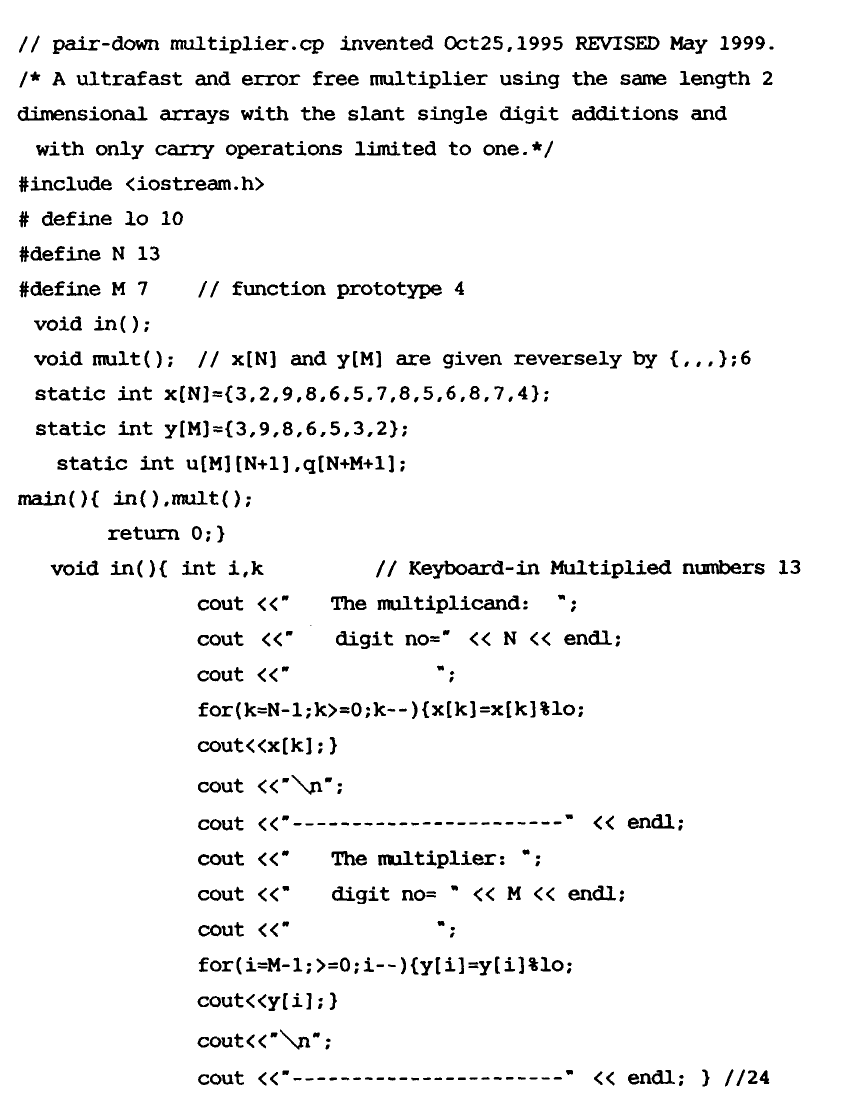 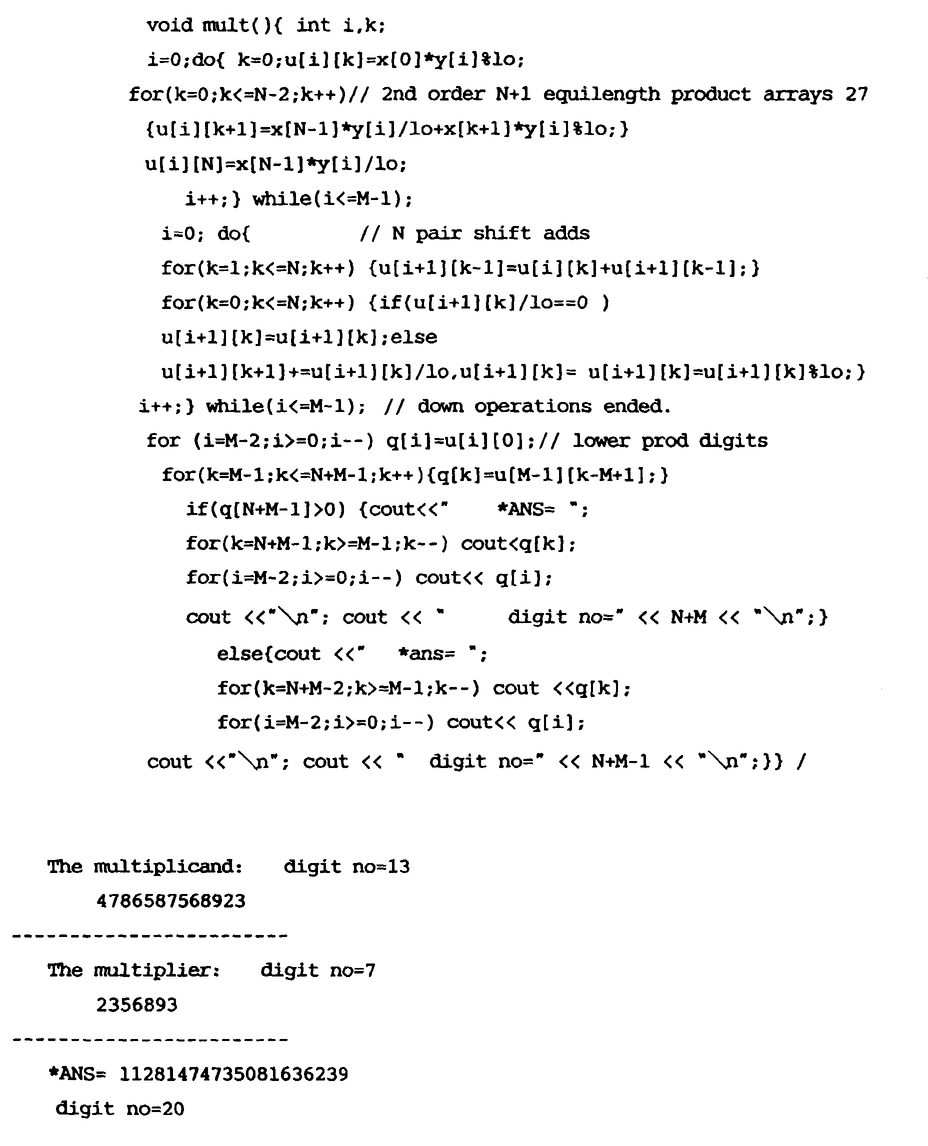 And the following are another example of the source list of a program implementing the present invention, and an output of its execution result.

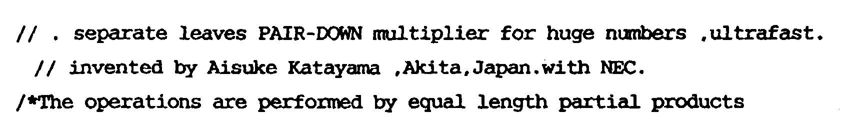

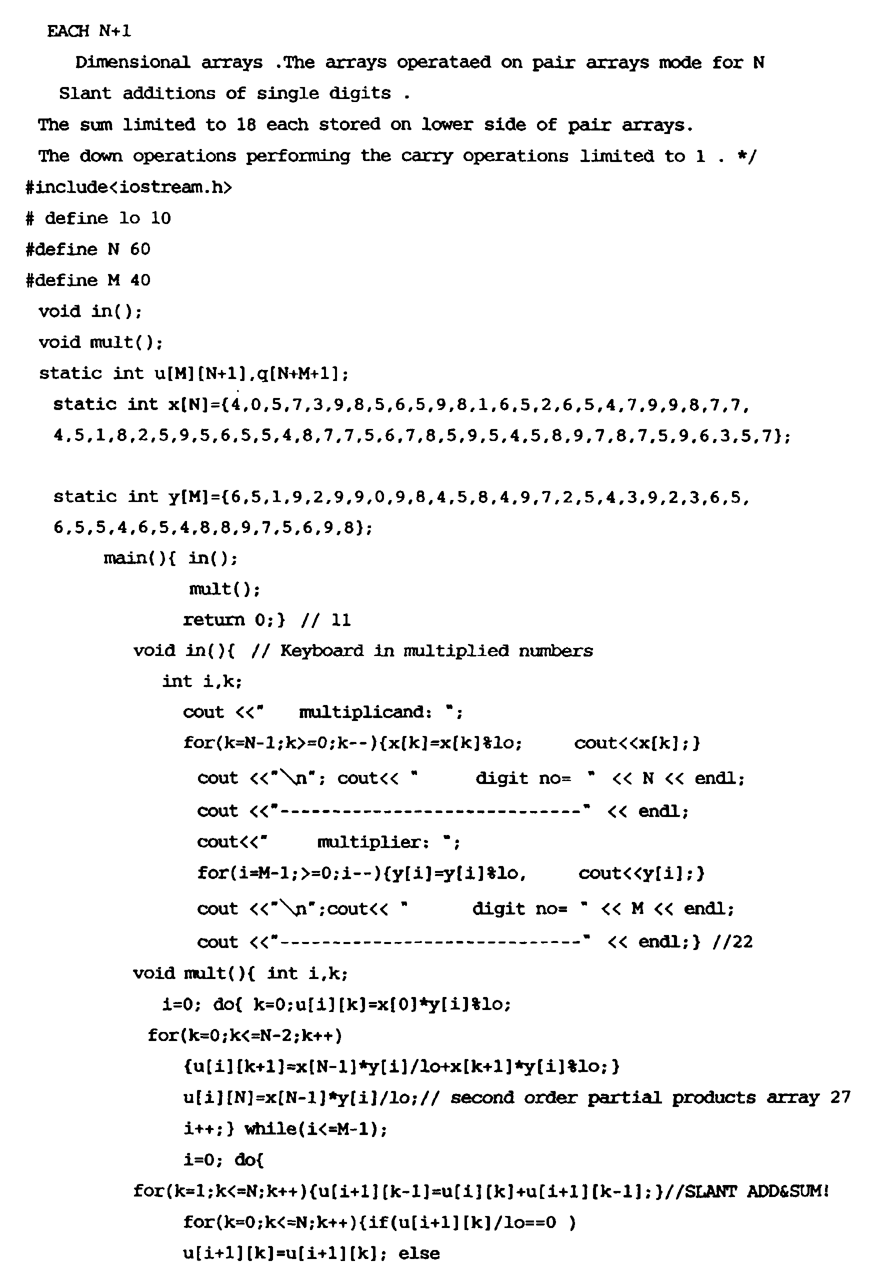

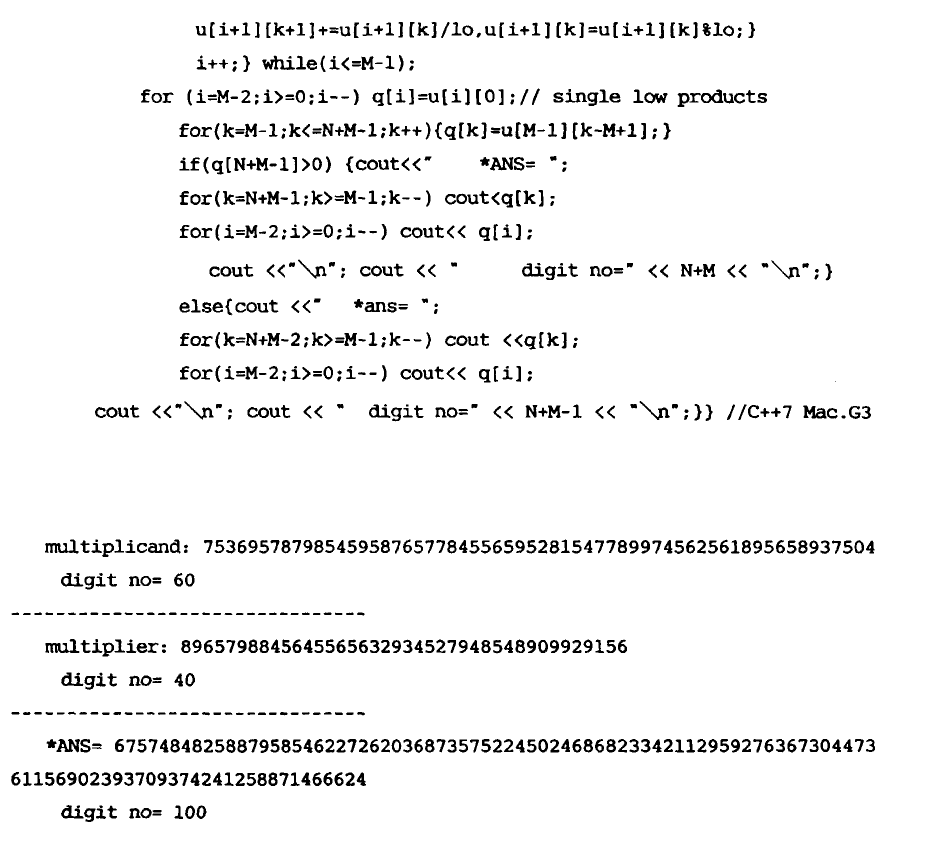

To summarize this embodiment;
(1) The multiplication system invented is specified in the multiplicand and the multiplier. In the decimal system which is widely used, the explanations are detailed in the specifications. The multiplicand is given by N digit decimal numbers and is expressed as x[N-1]x[N-2]..x[O] as an array. The multiplier does not been given y[M-1],..,y[O] as an array, but is given as y[i], i=0,1,...,M-1. Wherein i are the integer to select the multiplier single digit 0-9, and when we make the partial products arrays ,the arrays be N+1 or N digits. When the digit length is N, we set u[i][N]=0,(0 digit is setting at the N+1 digit position). Thus we have the two dimensional equal length N+1 digit partial product arrays
   P[i]:u[i][N]u[i][N-1] ...u[i][0], i=0,...,M-1
   In the invention of the PAIR DOWN MULTIPLIER we use the arrays mentioned above.
(2) The two dimensional equlength arrays p[i], i=0,1...M-1 are the basic elements of the PAIR DOWN MULTIPLIER which are constructed by pair down structures as the basic structures. The first pair down structure is as follows:
   The sign ')' shows paired arrays being related as the slant additions and the sums 0-18 generated stored on N elements of the lower pair array p[1].
   The sign '|' shows the down operations, on the lower pair array. The down operations do the clear operations on the two digit sums. From the rightmost two digit sum, we set the low 1 digit remaining the original position , high digit 1 is transferred to the next higher digit position and added as carryl. Thus we arrive at 1 digit only array. This lower array can be written as p[1]* and if the next pair down operation is continued, p[1]* becomes the upper array.
   The first pair down operations shown as follow: 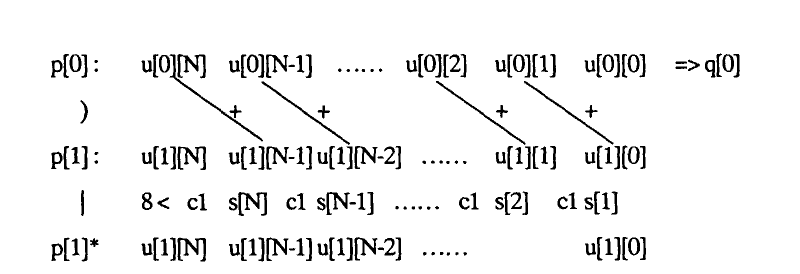 note : The right end element of p[0] unconcerning add, gives lowest product digit.
   In the pair down mode, the N additions performed in N+1 digit p[0] and p[1] pair arrays; 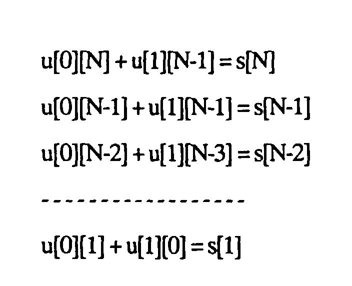 and the sums are placed in the lower pair array elements. U[1][N-1] ... u[1][0] exclusively [1][N] term 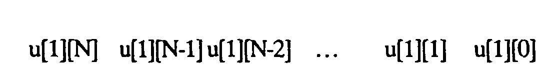 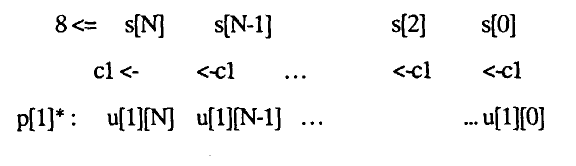 not concerned to addition ,the digit is high order of partial product for the component y[1],and value limiting to 8 (high comp.of 9*9).
   s[0] are 0-18. When s[i] i=0,1,..,.N are checked, and s<10, then the s remains constant, while s>=10, the low digit remains there, while high digit 1 is transferred as carryl adding to next higher digit. u[1][N] digit does not over 9, so constancy of array length of p[i] holds. p[1]*=u[1][N]...u[1][0]. The second pair down starts as follows p[1]*)p[2] | p[2]*.
(3) When the N digit multiplicand and the M digit multiplier are given as follows,
   x[N-1],x[N-2]...x[0] multiplicand
   y[M-1],y[M-2]...y[0] multiplier
   and separates the multiplier term as y[i] a single digit at i digit order,multiplying at the multiplicand x[0] digit position,we get N+1 or N digit partial product arrays. Wherein N digit case, we put 0 digit on N+1 digit array position. Thus for i=0,..M-1,N+1 digit equal length two dimensional partial product arrays p[0], p[1], .., p[M-1] axe provided Using these arrays, M pair down systems are formulated and the product can be obtained fast and errorfree. PAIR DOWN MULTIPLIER IS OBTAINED:
   FROM FOLLOWING PAIR DOWN MULT ARRAYS. 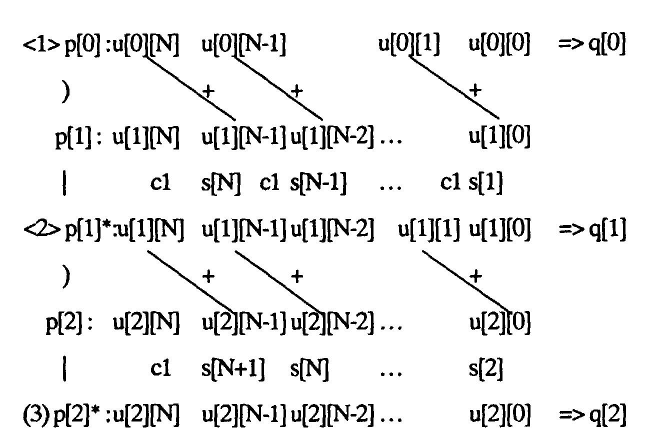 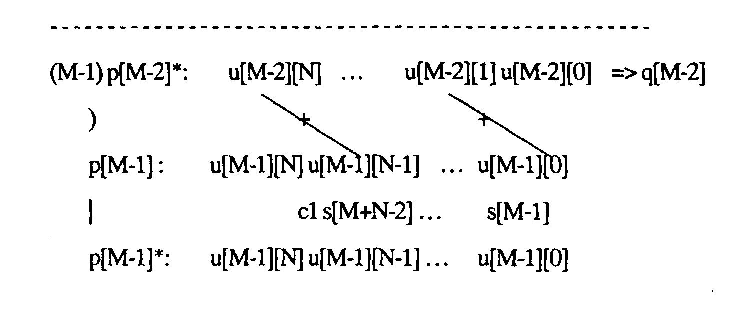 Thus the true product is given by
   P[M-1]* q[M-2] q[M-3] ...... q[1] q[0]
   note: s[N] is a sum of u[0][N]+u[1][N-1], and there are cases 0-9, or 10-18. In two digit case, as carry one c1, we add 1 to the low digit of the left element.
   note: Lower M-1 digits of the product are obtained from top array end element of each PAIR DOWN.
(4) Pair down multiplier can be extended to binary system. N bit binary multiplicand and M bit binary multiplier, we get from multiplying equation p[i] 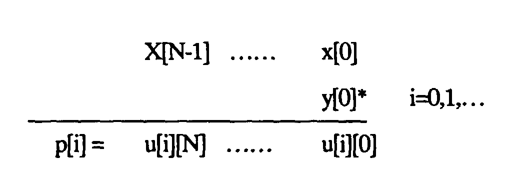 equal length arrays, but we get two kind arrays. One kinds are total 0 array of N+1 bit. As
   p[i]: 00 ..................0
   other are head bit 0.
   p[i]: 011011......0
   Using these digit equal length partial product binary arrays of two kind, and pair down calculation gives errorfree fastans. 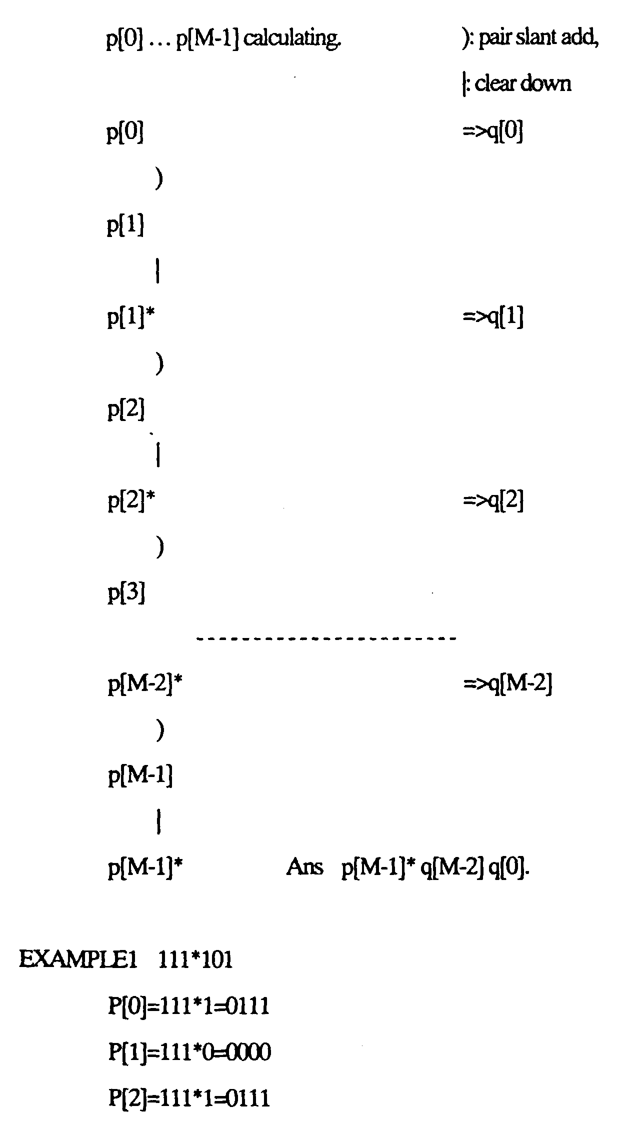 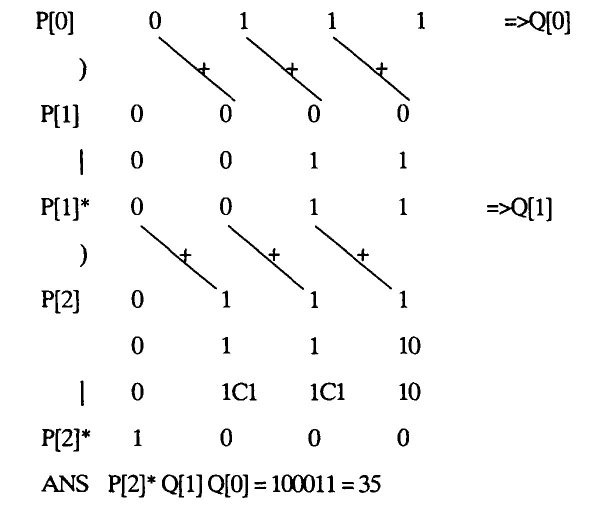
On large calculation, fight array Q[].. and last array P[M-1] give the product, other arrays may be eliminated.

The preferred embodiments of the present invention have been described. It should be understood, however, that the present invention is not limited to the foregoing embodiments, and various additions and modifications can be made. Specifically, the present invention was applied to the multiplication of decimal and binary numbers in the foregoing embodiments. But the present invention can be generally applied to multiplication of an L scale number (≧2), such as multiplication of an octal number, a hexadecimal number, and the multiplication of other numbers than decimal and binary numbers.

"A computer-readable recording medium" means a portable medium such as a floppy disk; a magneto-optical disk; a ROM, a CD-ROM or a storage device such as a hard disk incorporated in the computer system. Further, "a computer-readable recording medium" includes one, which holds a program for a fixed period of time, like a volatile memory (RAM) incorporated in the computer system as a server or a client when a program is transmitted through a network such as the Internet or a communication line such as a telephone line.

The above program may be transmitted from the computer system storing the program in its storage device or the like to another computer system through a transmission medium or a transmitted wave therein. "A transmission medium" for transmitting the program means a medium having a function of transmitting information like a network (communication network) such as the Internet or a line (communication line) such as a telephone line.

The above program may be provided for realizing a part of the foregoing function. In addition, the program may be one to be realized in combination with a program having the above function already recorded in the computer system, in other words, a difference file (difference program).

Furthermore, in the foregoing embodiments, the multiplication by the partial product calculation and the pair-down operation is realized as a computer program, and the computer reads and executes this computer program. However, all or portions of the multiplication by the present invention may be realized by hardware using a logical circuit and a sequential circuit. For example, if the multiplication of the figures represented by binary numbers, which was descried above with reference to the third embodiment, is realized by using binary logic, a circuit of partial product calculation can be easily realized, and especially a high-speed operation can be obtained.

The preferred embodiments of the invention have been described with reference to the accompanying drawings. But it should be understood that specific constitutions are not limited to the foregoing embodiments, and various constitutions and designs can be made without departing from the spirit and scope of the present invention.

## Claims

1. A multiplication apparatus for obtaining a product Q of a multiplicand X having N digits (N ≧2) represented by an L scale number (L≧2) and a multiplier Y having M digits (M≧2) represented by the L scale number, comprising:
partial product calculating means (12) for calculating, for each order in the multiplier Y, a partial product having maximum N+ 1 digits as a multiplied value of a numerical value of the order and the multiplicand X; and
pair-down operating means (13) for performing slant addition and carrying for partial products calculated by the partial product calculation unit in order from a partial product of an order 0 of the multiplier Y to a partial product of an order M-1 with two partial products adjacent to each other set as a pair, thus operating numerical values of respective digits constituting the product Q in sequence.

2. A multiplication apparatus according to claim 1, further comprising storing means having a plurality of arrays, which include an N+1 number of array elements from 0-th to N-th provided to store the digits of the partial products calculated by the partial product calculating means,
wherein the pair-down operating means (13) sets a numerical value of a least significant digit of a partial product corresponding to the order 0 of the multiplier Y as a part of the product Q;
repeats processing executed, in order from a partial product corresponding to an order 1 of the multiplier Y to a partial product corresponding to an order M-2, to add a value of any element of k-th to an array storing a partial product corresponding to an order lower by one than that of a given order to a value of an array element of k-1-th (1 ≦k≦N) on the array storing the partial product, then perform carrying for a result of addition between adjacent array elements to convert a value of each array element into 1 digit, and set a value of an array element of 0-th as a part of the product Q; and
for a partial product corresponding to an order M-1 of the multiplier Y, adds a value of the array element of k-th to the array storing a partial product corresponding to an order M-2 lower by one than that of the partial product to a value of the array element of k-1-th (1≦k≦N) on the array storing the partial product, then performs carrying for a result of the addition to convert a value of each array element into 1 digit, and sets a numerical value stored in the array as a part of the product Q.

3. A multiplication apparatus according to claim 2, wherein, as the plurality of arrays, a number M of arrays is provided to correspond one to one to orders of the multiplier Y.

4. A multiplication apparatus according to claim 2, wherein, as the plurality of arrays, two arrays are provided to alternately store partial products of the orders 0 to M-1 of the multiplier Y by the partial product calculating means in synchronization with processing performed by the pair-down operating means.

5. A multiplication apparatus according to any one of claims 1 to 4, wherein the multiplicand X, the multiplier Y, the product Q and the partial products are represented by binary numbers, and the partial product calculating means (12) calculates an all-0 bit pattern having N digits as a partial product when a numerical value of an order of the multiplier Y is 0, and the multiplicand X itself having N digits as a partial product when a numerical value of an order of the multiplier is 1.

6. A method of multiplication performed to obtain a product Q of a multiplicand X having N digits (N ≧2) represented by an L scale number (L≧2) and a multiplier Y having M digits (M≧2) represented by the L scale number (L≧2), comprising:
partial product calculation steps (S301 to S305) for calculating, for each order of the multiplier Y, a partial product having maximum N+1 digits as a multiplied value of a numerical value of the order and the multiplicand X; and
pair-down operation steps (S306 to S311) for performing slant addition and carrying for the calculated partial products in order from a partial product of an order 0 of the multiplier Y to a partial product of an order M-1 with two partial products adjacent to each other set as a pair, thus operating numerical values of respective digits constituting the product Q in sequence.

7. A method of multiplication performed to obtain a partial product Q of a multiplicand X having N digits (N≧2) represented by an L scale number (L≧2) and a multiplier Y having M digits (M≧2) represented by the L scale number, comprising the steps of:
for each order of the multiplier Y, calculating a partial product having a maximum of N+1 digits as a multiplied value of a numerical value of the order and the multiplicand X, and storing the partial product in an array corresponding one to one to the order of the multiplier Y;
setting a numerical value of a least significant digit of a partial product corresponding to an order 0 of the multiplier Y as part of the product Q;
repeating processing executed, in order from a partial product corresponding to an order 1 of the multiplier Y to a partial product corresponding to an order M-2, to add a value of array element of k-th to an array storing a partial product corresponding to an order lower by one than that of a given order to a value of an array element of k-1-th (1 ≦k≦N) in the array storing the partial product corresponding to an order lower by one than that of the partial product, then perform carrying for a result of addition between adjacent array elements to convert a value of each array element into 1 digit, and set a numerical value of a least significant digit as a part of the product Q; and
for a partial product corresponding to an order M-1 of the multiplier Y, adding a value of the array element of k-th to the array storing a partial product corresponding to an order M-2 lower by one than that of the partial product to a value of the array element of k-1-th (1 ≦k≦N) in the array storing the partial product, performing carrying for a result of the addition to convert a value of each array element into 1 digit, and setting a numerical value stored in the array as apart of the product Q.

8. A method of multiplication performed to obtain a product Q of a multiplicand X having N digits (N ≧2) represented by an L scale number (L≧2) and a multiplier Y having M digits (M≧2) represented by the L scale number, comprising the steps of:
when a multiplied value of a numerical value of an order i (0≦i≦M-1) of the multiplier Y and the multiplicand X is called an order i corresponding partial product, calculating and storing an order 0 corresponding partial product in one of two arrays including a number N+1 of array elements from 0-th to N-th, and calculating and storing an order 1 corresponding partial product in the other array;
setting a numerical value of the array element of 0-th of, of the two arrays, one storing the order 0 corresponding partial product as a part of the product Q, adding a value of an array element of k-th to the array storing the order 0 corresponding partial product to a value of an array element of k-1-th (1 ≦k ≦N) in the array storing the order 1 corresponding partial product, performing carrying for a result of addition between adjacent array elements to convert a value of each array element into 1 digit, and setting a numerical value of the array element of 0-th as a past of the product Q;
repeating processing executed, in order from an order 2 of the multiplier Y to an order M-2, to calculate an order i corresponding partial product and overwriting this partial product in, of the two arrays, one storing an order i-2 corresponding partial product, add a value of the array element of k-th to the other array to a value of the array element of k-1-th (1≦k≦N) in the overwritten array, then perform carrying for a result of addition between adjacent array elements to convert a value of each array element into 1 digit, and set a value of the array element of 0-th as a part of the product Q; and
calculating an order M-1 corresponding partial product and overwriting this partial product on, of the two arrays, one storing an order M-3 corresponding partial product, adding a value of the array element of k-th to the other array to a value of the array element of k-1-th (1 ≦k≦N) on the overwritten array, then performing carrying for a result of addition between adjacent array elements to convert a value of each array element into 1 digit, and setting a numerical value stored in the overwritten array as part of the product Q.

9. A method of multiplication according to any one of claims 6 to 8, wherein the multiplicand X, the multiplier Y, the product Q and the partial products are represented by binary numbers, an all-0 bit pattern having N digits is calculated as a partial product when a numerical value of an order of the multiplier Y is 0, and the multiplicand X itself having N digits is calculated as a partial product when a numerical value of an order of the multiplier Y is 1.

10. A computer-readable recording medium, wherein a program used to cause the computer to execute the multiplication method of claim 6 is recorded.

11. A computer-readable recording medium, wherein a program used to cause the computer to execute the multiplication method of claim 7 is recorded.

12. A computer-readable recording medium, wherein a program used to cause the computer to execute the multiplication method of claim 8 is recorded.

13. A computer-readable recording medium, wherein a program used to cause the computer to execute the multiplication method of claim 9 is recorded.

14. The multiplication apparatus according to claim 3, wherein, as the plurality of arrays, two arrays are provided to alternately store partial products from an order 0 to an order M-1 of the multiplier Y by the partial product calculation unit in synchronization with processing performed by the pair-down operation unit.

15. The method of multiplication according to claim 7, wherein the multiplicand X, the multiplier Y, the product Q and the partial products are represented by binary numbers, an all-0 bit pattern having N digits is calculated as a partial product when a numeriacl value of an order of the multiplier Y is 0, and the multiplicand X itself having N digits is calculated as a partial product when a numerical value of an order of the multiplier Y is 1.

16. The method of multiplication according to claim 8, wherein the multiplicand X, the multiplier Y, the product Q and the partial products are represented by binary numbers, an all-0 bit pattern having N digits is calculated as a partial product when a numerical value of an order of the multiplier Y is 0, and the multiplicand X itself having N digits is calculated as a partial product when a numerical value of an order of the multiplier is 1.

17. A method of multiplication performed to obtain a product Q of a multiplicand X having N digits (N≧2) represented by an L scale number (L≧2) and a multiplier Y having M digits (M≧2) represented by the L scale number, comprising the steps of:
calculating the partial product of the multiplicand X and each digit of the multiplier Y;
repeating to add said partial product to memory by performing slant operations between the corresponding digits of said memory and the partial product, and to reserve the lowermost digit in said memory for the product Q; and
obtaining the product Q from said memory and the reserved digits.

18. A computer-readable recording medium, wherein a program used to cause the computer to execute the multiplication method of claim 17 is recorded.
